(19) **Europäisches Patentamt / European Patent Office / Office européen des brevets**

(11) **EP 4 321 577 A1**

(12) **EUROPEAN PATENT APPLICATION**
published in accordance with Art. 153(4) EPC

(43) Date of publication:
14.02.2024 Bulletin 2024/07

(21) Application number: 22784738.1

(22) Date of filing: 08.04.2022

(51) International Patent Classification (IPC):
$C08L\ 59/00^{(2006.01)}$     $C08B\ 15/00^{(2006.01)}$
$C08B\ 15/02^{(2006.01)}$     $C08J\ 3/20^{(2006.01)}$
$C08J\ 3/215^{(2006.01)}$     $C08J\ 5/00^{(2006.01)}$
$C08L\ 1/02^{(2006.01)}$     $C08L\ 1/10^{(2006.01)}$

(52) Cooperative Patent Classification (CPC):
C08B 15/00; C08B 15/02; C08J 3/20; C08J 3/215;
C08J 5/00; C08L 1/02; C08L 1/10; C08L 59/00

(86) International application number:
PCT/JP2022/017415

(87) International publication number:
WO 2022/215756 (13.10.2022 Gazette 2022/41)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 09.04.2021 JP 2021066406
04.11.2021 JP 2021180340

(71) Applicant: Asahi Kasei Kabushiki Kaisha
Tokyo 1000006 (JP)

(72) Inventor: KUSUMOTO, Sara
Tokyo 100-0006 (JP)

(74) Representative: D Young & Co LLP
120 Holborn
London EC1N 2DY (GB)

(54) **POLYACETAL RESIN COMPOSITION AND METHOD FOR MANUFACTURING SAME**

(57) The purpose of the present invention is to provide a resin composition and a molded product thereof with which it is possible to avoid problems such as the generation of odor and gas from the resin composition and the occurrence of voids in the molded product, and methods for manufacturing the resin composition and the molded product. The present invention provides a method for manufacturing a resin composition containing cellulose nanofibers and a polyacetal resin, the method including a step for obtaining a resin composition by melt-mixing mixed ingredients that include cellulose nanofibers and a polyacetal resin in a state in which the water content of the cellulose nanofibers is 0.01-5 mass%.

**Description**

FIELD

The present invention relates to a polyacetal resin composition and to a method for its production.

BACKGROUND

Polyacetal resins exhibit excellent properties including mechanical properties, thermal properties, electrical properties, slidability and formability, and are therefore widely used primarily as structural materials and mechanical parts in electrical devices, automobile parts and precision machinery parts. For gear purposes, polyacetal resins are widely utilized for their satisfactory mechanical properties and excellent slidability.

PTL 1 describes a polyacetal resin composition having a specific cellulose powder added to a polyacetal resin, PTL 2 describes a polyacetal resin composition having cellulose nanofibers with a specific aspect ratio and mean fiber length added to a polyacetal resin, and PTL 3 describes a resin composition comprising chemically modified cellulose nanofibers and a thermoplastic resin, which is optionally polyacetal.

[CITATION LIST]

[PATENT LITERATURE]

[0004]

　　[PTL 1] International Patent Publication No. WO2010/119810
　　[PTL 2] International Patent Publication No. WO2012/049926
　　[PTL 3] International Patent Publication No. WO2016/148233

SUMMARY

[TECHNICAL PROBLEM]

However, the conventional techniques for compositing a polyacetal resin and cellulose as described in PTLs 1 to 3 generate odors from the resin compositions, exhibit variation in tensile characteristics due to voids in the molded articles, and produce irregularities on the molded article surfaces due to generation of gas from the resin compositions, such that the original desired performance of the polyacetal resin compositions is not fully exhibited.

One aspect of the invention solves these problems, providing a resin composition and molded article that can avoid the problems of generating odors from the resin compositions, exhibiting variation in tensile characteristics due to voids in the molded articles and producing irregularities on the molded article surfaces due to generation of gas from the resin compositions, as well as a method for producing the same.

[SOLUTION TO PROBLEM]

Specifically, the present invention encompasses the following aspects.

[1] A method for producing a resin composition comprising cellulose nanofibers and a polyacetal resin, wherein the method includes:

a step of melt kneading a kneading component that includes cellulose nanofibers and a polyacetal resin with a moisture content of the cellulose nanofibers being 0.01 mass% to 5 mass%, to obtain a resin composition.

[2] The method according to [1] above, wherein a portion of the resin composition is used as a portion of the kneading component.

[3] The method according to [1] or [2] above, wherein a number-average fiber diameter of the cellulose nanofibers is 10 to 1000 nm.

[4] The method according to any one of [1] to [3] above, wherein a degree of acyl substitution of the cellulose nanofibers is 0.5 to 1.5.

[5] The method according to any one of [1] to [4] above, wherein a degree of crystallinity of the cellulose nanofibers is 60% or greater.

[6] The method according to any one of [1] to [5] above, wherein a moisture content of the resin composition is 0.03 mass% to 0.3 mass%.

[7] The method according to any one of [1] to [6] above, wherein the kneading component includes a formaldehyde scavenger, and a formaldehyde scavenger content a1 [mass%] of the total kneading component, a cellulose nanofiber moisture content b [mass%] supplied to melt kneading, and a cellulose nanofiber content c [mass%] of the total kneading component, satisfy the following relationship:

$$b \times c \times 0.00012 + 0.04 \leq a1 \leq b \times c \times 0.015 + 0.2.$$

[8] The method according to any one of [1] to [7] above, wherein the kneading component includes a formic acid scavenger, and a formic acid scavenger content a2 [mass%] of the total kneading component, a cellulose nanofiber moisture content b [mass%] supplied to melt kneading, and a cellulose nanofiber content c [mass%] of the total kneading component, satisfy the following relationship:

$$b \times c \times 0.00012 + 0.04 \leq a2 \leq b \times c \times 0.015 + 0.2.$$

[9] A resin composition comprising cellulose nanofibers and a polyacetal resin, wherein a moisture content of the resin composition is 0.03 mass% to 0.3 mass%.

[10] The resin composition according to [9] above, wherein a number-average fiber diameter of the cellulose nanofibers is 10 to 1000 nm.

[11] The resin composition according to [9] or [10] above, wherein a degree of acyl substitution of the cellulose nanofibers is 0.5 to 1.5.

[12] The resin composition according to any one of [9] to [11] above, wherein a degree of crystallinity of the cellulose nanofibers is 60% or greater.

[13] Pellets of a resin composition according to any one of [9] to [12] above.

[14] Pellets according to [13] above, wherein a moisture content after standing for 48 hours at 40°C under saturated water vapor pressure is 0.3 mass% to 5.0 mass%.

[15] A molded article of a resin composition comprising cellulose nanofibers and a polyacetal resin, wherein a moisture content of the molded article is 0.03 mass% to 0.3 mass%.

[16] The molded article according to [15] above, wherein a number-average fiber diameter of the cellulose nanofibers is 10 to 1000 nm.

[17] The molded article according to [15] or [16] above, wherein a degree of acyl substitution of the cellulose nanofibers is 0.5 to 1.5.

[18] The molded article according to any one of [15] to [17] above, wherein a degree of crystallinity of the cellulose nanofibers is 60% or greater.

[19] A method for producing a molded article of a resin composition comprising cellulose nanofibers and a polyacetal resin, wherein the method includes:

   a step of obtaining a resin composition comprising cellulose nanofibers and a polyacetal resin, and
   a step of molding the resin composition to obtain a molded article,

and wherein the resin composition is molded with a moisture content of the resin composition at 0.03 mass% to 0.3 mass%.

[20] A method for producing a kneaded blend of a resin composition comprising cellulose nanofibers and a polyacetal resin, wherein the method includes:

   a storage step in which a resin composition comprising the cellulose nanofibers and the polyacetal resin is stored with a moisture content of greater than 0.3 mass%,
   a drying step in which the stored resin composition is dried at a temperature Td which is a temperature of at least 70°C lower than a melting point Tm of the polyacetal resin, to a moisture content of 0.03 mass% to 0.3 mass%, and
   a heating step in which the resin composition that has reached a moisture content of 0.03 mass% to 0.3 mass% in the drying step is hot kneaded.

[21] A method for producing a molded article of a resin composition comprising cellulose nanofibers and a polyacetal resin, wherein the method includes:

   a storage step in which a resin composition comprising the cellulose nanofibers and the polyacetal resin is stored with a moisture content of greater than 0.3 mass%,
a drying step in which the stored resin composition is dried at a temperature Td which is a temperature of at least 70°C lower than a melting point Tm of the polyacetal resin, to a moisture content of 0.03 mass% to 0.3 mass%, and
a molding step in which the resin composition that has reached a moisture content of 0.03 mass% to 0.3 mass% in the drying step is hot molded.

[22] The method according to any one of [19] to [21] above, wherein the resin composition is obtained by the method according to any one of [1] to [8] above.

[23] A method of storing a resin composition, wherein a resin composition comprising cellulose nanofibers and a polyacetal resin is stored in a sealed state in a packaging bag having a water vapor permeability of 1 g/(m²·24 h) or lower at 40% relative humidity and a temperature of 90°C.

[24] The method according to 23 above, wherein the resin composition is a resin composition according to any one of [9] to [12] above.

[25] A pellet container composed of pellets of a resin composition comprising cellulose nanofibers and a polyacetal resin, and a container housing the pellets,
wherein a moisture content of the pellets is 0.03 mass% to 0.3 mass%.

[26] The pellet container according to [25] above, wherein a moisture content of the pellets after standing for 48 hours at 40°C under saturated water vapor pressure is 0.3 mass% to 5.0 mass%.

[27] The pellet container according to [25] or [26] above, wherein the container is constituted of a member having a water vapor permeability of 1 g/(m²·24 h) or lower at 40% relative humidity and a temperature of 90°C, and comprises a sealing mean.

[ADVANTAGEOUS EFFECTS OF INVENTION]

One aspect of the invention can provide a resin composition and molded article that can avoid the problems of generating odors from resin compositions, exhibiting variation in tensile characteristics due to voids in the molded articles and producing irregularities on the molded article surfaces due to generation of gas from the resin compositions, as well as method for producing the same.

DESCRIPTION OF EMBODIMENTS

Exemplary aspects of the present invention (hereunder also referred to collectively as "the embodiment") will now be described in detail, with the understanding that they are not limitative on the invention.

The present inventors examined hot melting of resin compositions comprising cellulose nanofibers and polyacetal resins, and the various causes responsible for lower polyacetal resin molecular weight and consequent generation of odor and gas from resin compositions and voids in the molded articles, and focused on the fact that one such cause is decomposition of polyacetal resins in the moisture present in the resin composition during hot melting. It has been assumed in the prior art that polyacetal resins undergo virtually no degradation by moisture, and therefore this discovery is unexpected for a person skilled in the art.

The present inventors conducted further research based on this discovery, and found that controlling the moisture content of cellulose nanofibers to within a specified range during production of a resin composition comprising cellulose nanofibers and a polyacetal resin, and controlling the moisture content of the resin composition to within a specified range during molding of the resin composition, are advantageous for inhibiting decomposition of the polyacetal resin, reducing consequent generation of odor and gas from the resin composition, and inhibiting generation of voids in the molded article.

One aspect of the invention provides a method for producing a resin composition comprising cellulose nanofibers and a polyacetal resin, wherein the method includes:
a step of melt kneading components that include cellulose nanofibers with a cellulose nanofiber moisture content of 5 mass% or lower, and especially 0.01 mass% or greater and 5 mass% or lower, and a polyacetal resin, to obtain a resin composition.

According to one aspect, the cellulose nanofiber moisture content during melt kneading of the cellulose nanofibers and polyacetal resin is 5 mass% or lower, 4 mass% or lower or 3 mass% or lower from the viewpoint of inhibiting generation of odor and gas from the resin composition and generation of voids in the molded article, due to lower molecular weight of the polyacetal resin, and according to another aspect it is 0.01 mass% or greater, from the viewpoint of avoiding degradation of the cellulose nanofibers by the heat required for drying, in order to satisfactorily maintain the physical properties of the resin composition and the molded article obtained using it. The cellulose nanofiber moisture content is the value measured using a heat drying moisture meter.

One aspect of the invention provides a resin composition comprising cellulose nanofibers and a polyacetal resin, wherein the moisture content of the resin composition is 0.3 mass% or lower, and especially 0.03 mass% or greater and 0.3 mass% or lower. Such a resin composition can be produced by the method for producing a resin composition as described above, for example.

According to one aspect, the moisture content of the resin composition is 0.3 mass% or lower, 0.29 mass% or lower or 0.28 mass% or lower from the viewpoint of avoiding lowering the molecular weight of the polyacetal resin to inhibit generation of odor and gas from the resin composition and generation of voids in the molded article, and according to another aspect it is 0.03 mass% or greater, 0.04 mass% or greater or 0.05 mass% or greater, from the viewpoint of avoiding accelerated decomposition of the polyacetal and degradation of the cellulose nanofibers by the heat required for drying, to satisfactorily maintain the physical properties of the resin composition and the molded article obtained using it. For the purpose of the disclosure, the moisture content of the resin composition, pellets and molded article is the value measured according to ISO15512 using a Karl Fischer moisture meter.

Another aspect of the invention provides a method for producing a molded article of a resin composition comprising cellulose nanofibers and a polyacetal resin, wherein the method includes a step of obtaining a resin composition comprising cellulose nanofibers and a polyacetal resin, and a step of molding the resin composition to obtain a molded article, and wherein the resin composition is molded with the moisture content of the resin composition in the range specified above (according to one aspect this is 0.3 mass% or lower, and especially 0.03 mass% or greater and 0.3 mass% or lower).

Another aspect of the invention provides a molded article of a resin composition comprising cellulose nanofibers and a polyacetal resin, wherein the moisture content of the molded article is 0.3 mass% or lower, and especially 0.03 mass% or greater and 0.3 mass% or lower. Such a molded article can be produced by the method for producing a molded article described above, for example.

<Resin composition>

From the viewpoint of satisfactorily obtaining an effect of improving the mechanical properties and thermal stability of the resin composition, the lower limit for the mass ratio of cellulose nanofibers with respect to the total mass of the resin composition is preferably 0.05 mass% or greater, 0.1 mass% or greater or 1 mass% or greater, and from the viewpoint of satisfactorily maintaining the desired properties of the polyacetal resin in the resin composition, the upper limit is preferably 50 mass% or lower, 40 mass% or lower, 30 mass% or lower or 20 mass% or lower.

The amount of cellulose nanofibers with respect to 100 parts by mass of the polyacetal resin is preferably 0.1 part by mass or greater, 1 part by mass or greater, 2 parts by mass or greater or 3 parts by mass or greater, and the upper limit is preferably 40 parts by mass or lower, 30 parts by mass or lower, 20 parts by mass or lower, 15 parts by mass or lower or 10 parts by mass or lower. The amount of the cellulose nanofibers is preferably within this range from the viewpoint of balance between the flow property when the resin composition is melted, and its mechanical properties. According to one aspect, the dried cellulose nanofibers can be re-dispersed to a high degree after infiltrating the polyacetal resin, and can exhibit sufficient dynamic properties even with a low amount of cellulose nanofibers with respect to the resin.

Examples of constituent components of the resin composition will now be explained in detail. For the purpose of the disclosure, the charging ratios of the melt kneading components during production of the resin composition are considered to be the contents of each component in the resin composition.

<Cellulose nanofibers>

The cellulose starting material for obtaining the cellulose nanofibers may be natural cellulose or regenerated cellulose. Natural cellulose includes wood pulp obtained from wood sources (broadleaf trees or conifers), nonwood pulp obtained from non-wood sources (cotton, bamboo, hemp, bagasse, kenaf, cotton linter, sisal and straw), and cellulose fiber aggregates obtained from sources such as animals (such as sea squirts) and algae, or produced by microbes (such as acetic acid bacteria). Regenerated cellulose for use may be regenerated cellulose fibers (such as viscose, cupra and Tencel), cellulose derivative fibers, and superfine yarn of regenerated cellulose or cellulose derivatives, obtained by electrospinning methods.

These cellulose starting materials contain alkali-soluble components and sulfuric acid-insoluble components (such as lignin), and the alkali-soluble portion and the sulfuric acid-insoluble components may be reduced by carrying out refining steps such as delignification by digestion processing, and bleaching steps. However, since refining steps such as delignification by digestion processing, and bleaching steps, also cut the molecular chains of cellulose, altering its weight-average molecular weight and number-average molecular weight, it is preferable for the refining steps and bleaching steps for the cellulose starting material to be controlled so that the weight-average molecular weight and the weight-average molecular weight/number-average molecular weight ratio of the cellulose do not deviate from the proper ranges.

Since refining steps such as delignification by digestion processing and bleaching steps lower the molecular weight of the cellulose molecules, this raises the concern that these steps may lead to low molecularization of the cellulose, and degeneration of the cellulose starting material which increases the abundance ratio of the alkali-soluble portion. Since the alkali-soluble portion has poor heat resistance, refining and bleaching of the cellulose starting material is preferably controlled so that the amount of alkali-soluble components in the cellulose starting material is less than a certain value.

The cellulose starting material may also be processed by dry grinding treatment. The pulverizer used for dry grinding may be any type of system, with a high-speed rotary impact pulverizer being preferred to produce a cellulose starting material in a satisfactory form. A high-speed rotary impact pulverizer is a type of pulverizer that applies impact force or shear force to the cellulose starting material by a pin or a rotor with a specialized structure rotating in the pulverizing chamber, thus pulverizing it. Water may also be added to some amount with respect to the cellulose starting material weight in order to reduce damage to the fibers during dry grinding.

Pulverizers of this type include free pulverizers, New Cosmomizer (Nara Machinery Co., Ltd.), Victory Mill, Fine Victory Mill (both by Hosokawa Micron Group), Turbomill (Turbo Kogyo Co., Ltd.), Ultra-Rotor (W.I.R Co.), Makino Pulverizer and UltraPlex (Makino Mfg. Co., Ltd.), Fine Mill (Nippon Pneumatic Kogyo Co., Ltd.), Impeller Mill (Seishin Enterprise Co., Ltd.) and Disc Refiner (Aikawa Iron Works Co.).

The method for reducing the fiber diameters to convert the cellulose starting material to cellulose nanofibers may be either wet or dry defibrating, and the defibrating conditions (shear field application method, shear field size) may be set as appropriate for obtaining cellulose nanofibers that can be very finely dispersed in the resin composition. From the viewpoint of inhibiting reduction in the degree of crystallinity caused by shearing, the defibration is preferably carried out in a wet system using a solvent.

The solvent used for defibration may be water or an organic solvent, for example. Water is preferred as an inexpensive solvent that requires no explosion proofing of the production equipment. Aprotic solvents are preferred as organic solvents. When the cellulose starting material is immersed in an aprotic solvent, the cellulose swells rapidly, and can be micronized by very minimal application of stirring or shearing energy. Alternatively, a cellulose modifying agent may be added before, during or after defibration to directly obtain chemically modified cellulose nanofibers without solvent exchange. An aprotic solvent is therefore preferred from the viewpoint of production efficiency.

The aprotic solvent may be an alkyl sulfoxide, an alkylamide or pyrrolidone, for example. Any of these solvents may be used alone or in combinations of two or more.

Examples of alkyl sulfoxides include di-C1-4 alkyl sulfoxides such as dimethyl sulfoxide (DMSO), methylethyl sulfoxide and diethyl sulfoxide.

Examples of alkylamides include N,N-di-C1-4 alkylformamides such as N,N-dimethylformamide (DMF) and N,N-diethylformamide; and N,N-di-C1-4 alkylacetamides such as N,N-dimethylacetamide (DMAc) and N,N-diethylacetamide.

Examples of pyrrolidones include pyrrolidones such as 2-pyrrolidone and 3-pyrrolidone; and N-C1-4 alkylpyrrolidones such as N-methyl-2-pyrrolidone (NMP).

Any of these aprotic solvents may be used alone or in combinations of two or more. Among these aprotic solvents, using DMSO, DMF, DMAc and NMP, and especially DMSO, will allow cellulose nanofibers to be more efficiently produced. While the action mechanism for this is not completely understood, it is theorized to be due to homogeneous microswelling of the cellulose starting material in the aprotic solvent.

Defibration of the cellulose starting material may be carried out with an apparatus with which shear is effectively applied to the cellulose starting material, such as a macerator, beater, refiner, low-pressure homogenizer, high-pressure homogenizer, ultrahigh-pressure homogenizer, emulsifier, homomixer, grinder, Mascolloider, cutter mill, ball mill, bead mill, jet mill, single-screw extruder, twin-screw extruder, ultrasonic stirrer or household juicer mixer. Defibration with a homomixer using an aprotic solvent is preferred among these to allow chemical modification of the cellulose nanofibers at low energy and in a nonaqueous system, for example.

When a dispersing agent is used, it is preferably predissolved in the solvent used for defibration of the cellulose (i.e. before supplying the cellulose). In this case the solvent is preferably DMSO, DMF, DMAc or NMP, and especially DMSO, from the viewpoint of achieving satisfactory microdispersion of the cellulose nanofibers.

When a dispersing agent is used, the solvent may be replaced with a poor solvent for the dispersing agent after defibration to promote adhesion of the dispersing agent onto the cellulose nanofibers. The poor solvent for the dispersing agent is a solvent that does not dissolve the dispersing agent, and more preferably it is a solvent that does not dissolve the dispersing agent but is miscible with organic solvents that dissolve the dispersing agent. For example, when the dispersing agent is a cellulose derivative, the poor solvent may be water with a pH in the range of pH 1 to 14, water containing an inorganic salt (such as sodium chloride, calcium chloride or sodium silicate), an alcohol (such as methanol, ethanol, isopropanol or 1-hexanol), or a water/alcohol mixed solvent.

From the viewpoint of satisfactorily obtaining the effect of improving the physical properties of the cellulose nanofibers, the number-average fiber diameter of the cellulose nanofibers is 2 nm or greater, and preferably 4 nm or greater, 5 nm or greater, 10 nm or greater, 15 nm or greater or 20 nm or greater, according to one aspect, and according to another aspect it is 1000 nm or smaller, and preferably 500 nm or smaller, 450 nm or smaller, 400 nm or smaller, 350 nm or smaller, 300 nm or smaller or 250 nm or smaller.

The mean LID of the cellulose nanofibers is preferably 50 or greater, 80 or greater, 100 or greater, 120 or greater or 150 or greater, from the viewpoint of satisfactorily improving the mechanical properties of the resin composition containing the cellulose nanofibers, using a small amount of cellulose nanofibers. The upper limit is not particularly restricted but is preferably 5000 or lower from the viewpoint of handleability.

According to the disclosure, the lengths, diameters and LID ratio of the cellulose nanofiber can be determined by diluting an aqueous dispersion of the cellulose nanofibers with a water-soluble solvent (such as water, ethanol or tert-butanol) to 0.01 to 0.1 mass%, dispersing under processing conditions of 25,000 rpm × 5 minutes using a high-shear homogenizer (such as a "ULTRA-TURRAX T18" by IKA Corp.), casting onto mica and air-drying as a measuring sample, and performing measurement using a high-resolution scanning electron microscope (SEM) or atomic force microscope (AFM). Specifically, with the observation field adjusted to a magnification allowing observation of at least 100 fibers, the lengths (L) and diameters (D) of 100 randomly selected fibers are measured and the ratio (L/D) is calculated. The number-average value for the length (L), the number-average value for the diameter (D) and the number-average value for the (L/D) ratio of the cellulose nanofibers is calculated.

The length, diameter and LID ratio of the cellulose nanofibers in the resin composition can be confirmed by measurement according to the measuring method described above, using the solid resin composition as the measuring sample. Alternatively, the length, diameter and LID ratio of the cellulose nanofibers in the resin composition can be determined by dissolving the resin components of the resin composition in an organic or inorganic solvent that is able to dissolve the resin components of the resin composition, separating the cellulose nanofibers, adequately rinsing it with the solvent, replacing the solvent with a water-soluble solvent (such as water, ethanol or tert-butanol), adjusting to a 0.01 to 0.1 mass% dispersion, and re-dispersing with a high-shear homogenizer (for example, a "ULTRA-TURRAX T18" by IKA Corp.). The redispersion may be cast onto mica and air-dried as a measuring sample, and confirmation made by measurement using the measuring methods described above. The cellulose nanofibers are measured using 100 or more randomly selected fibers.

The degree of crystallinity of the cellulose nanofibers is preferably 55% or greater. If the degree of crystallinity is within this range, the mechanical properties (strength and dimensional stability) of the cellulose fibers themselves will be high, so that when the cellulose fibers are dispersed in a resin, the strength and dimensional stability of the resin composition will also tend to be high. A more preferred lower limit for the degree of crystallinity is 60%, 70% or 80%. The upper limit for the degree of crystallinity of the cellulose nanofibers is also not particularly restricted, a higher degree being preferred, but from the viewpoint of productivity the preferred upper limit is 99%.

Alkali-soluble polysaccharides such as hemicellulose and acid-insoluble components such as lignin are present between plant-derived cellulose microfibrils and between microfibril bundles. Hemicellulose is a polysaccharide composed of sugars such as mannan and xylan, and it plays a role in hydrogen bonding with cellulose and binding together microfibrils. Lignin is a compound class with aromatic rings that is known to participate in covalent bonding with hemicellulose in plant cell walls. A large residue of impurities such as lignin in cellulose nanofibers may result in discoloration by heating during working, and therefore the degree of crystallinity of the cellulose nanofibers is preferably within the ranges specified above from the viewpoint of reducing discoloration of the resin composition during extrusion or during shaping.

When the cellulose nanofibers are type I cellulose crystals (derived from natural cellulose), the degree of crystallinity referred to here is that determined by the following formula, from the diffraction pattern (2θ/deg. = 10 to 30) obtained by measurement of the sample by wide-angle X-ray diffraction, based on the Segal method.

$$\text{Degree of crystallinity (\%)} = ([\text{Diffraction intensity from (200) plane with } 2\theta/\text{deg.} = 22.5] - [\text{diffraction intensity from amorphous matter with } 2\theta/\text{deg.} = 18])/[\text{diffraction intensity from (200) plane with } 2\theta/\text{deg.} = 22.5] \times 100$$

When the cellulose nanofibers are type II cellulose crystals, the degree of crystallinity is determined by the following formula, from the absolute peak intensity $h0$ at $2\theta = 12.6°$ attributed to the (110) plane peak of the type II cellulose crystal, and the peak intensity $h1$ from the baseline for the plane spacing (line connecting $2\theta = 8°$ and $15°$), in wide-angle X-ray diffraction.

$$\text{Degree of crystallinity (\%)} = (h0 - h1)/h0 \times 100$$

The known crystalline forms of cellulose include type I, type II, type III and type IV, among which type I and type II are most commonly used, whereas type III and type IV are not commonly used on an industrial scale but have been obtained on a laboratory scale. The cellulose nanofibers of the disclosure are preferably cellulose fibers containing type I cellulose crystals or type II cellulose crystals, for relatively high mobility in terms of structure and to obtain a resin composition with a lower coefficient of linear expansion and more excellent strength and elongation when subjected to stretching or bending deformation, by dispersion of the cellulose nanofibers in the resin, and more preferably the cellulose nanofibers contain type I cellulose crystals and have a degree of crystallinity of 55% or higher. More preferred are cellulose nanofibers having a degree of crystallinity of 60% or greater, from the viewpoint of easily lowering the moisture content of the cellulose nanofibers.

The degree of polymerization of the cellulose nanofibers is preferably 100 or higher, 150 or higher, 200 or higher, 300 or higher, 400 or higher or 450 or higher, and preferably 3500 or lower, 3300 or lower, 3200 or lower, 3100 or lower or 3000 or lower.

The degree of polymerization of the cellulose nanofibers is preferably within this range from the viewpoint of workability and mechanical properties. The degree of polymerization is preferably not too high from the viewpoint of workability, and it is preferably not too low from the viewpoint of exhibiting mechanical properties.

The degree of polymerization of the cellulose nanofibers is the mean polymerization degree measured by a reduced relative viscosity method using a copper-ethylenediamine solution, as described in Verification Test (3) of "Japanese Pharmacopeia, 15th Edition Reference Manual (Hirokawa Shoten)".

According to one aspect, the weight-average molecular weight (Mw) of the cellulose nanofibers is 100,000 or higher and preferably 200,000 or higher. The ratio (Mw/Mn) of the weight-average molecular weight and number-average molecular weight (Mn) is preferably 6 or lower or 5.4 or lower. A higher weight-average molecular weight means a lower number of terminal groups of the cellulose molecules. Since the ratio (Mw/Mn) of the weight-average molecular weight and number-average molecular weight represents the width of the molecular weight distribution, a smaller Mw/Mn means a lower number of ends of cellulose molecules. Since the ends of the cellulose molecules are origins for thermal decomposition, it is not sufficient for the cellulose molecules of the cellulose nanofibers to merely have high weight-average molecular weight, but when a high weight-average molecular weight is combined with a more narrow width of the molecular weight distribution, it is possible to obtain especially high heat resistance for the cellulose nanofibers, and for a resin composition comprising the cellulose nanofibers and a resin. The weight-average molecular weight (Mw) of the cellulose nanofibers may be 600,000 or lower, or 500,000 or lower, for example, from the viewpoint of greater availability of the cellulose starting material. The ratio (Mw/Mn) of the weight-average molecular weight and number-average molecular weight (Mn) may be 1.5 or greater or 2 or greater, for example from the viewpoint of easier production of the cellulose nanofibers. The Mw can be controlled to within this range by selecting a cellulose starting material having the corresponding Mw, or by carrying out appropriate physical treatment and/or chemical treatment of the cellulose starting material. The Mw/Mn ratio can also be controlled to within this range by selecting a cellulose starting material having the corresponding Mw/Mn ratio, or by carrying out appropriate physical treatment and/or chemical treatment of the cellulose starting material. The Mw and Mw/Mn of the cellulose starting material may be in the ranges specified above according to one aspect. Examples of physical treatment for control of both the Mw and Mw/Mn include physical treatment by application of mechanical force, such as dry grinding or wet grinding with a microfluidizer, ball mill or disk mill, for example, or impacting, shearing, sliding or abrasion with a crusher, homomixer, high-pressure homogenizer or ultrasonic device, for example, while examples of chemical treatment include digestion, bleaching, acid treatment and regenerated cellulose treatment.

The weight-average molecular weight and number-average molecular weight of the cellulose referred to here are the values determined after dissolving the cellulose in lithium chloride-added N,N-dimethylacetamide, and then performing gel permeation chromatography with N,N-dimethylacetamide as the solvent.

The method of controlling the degree of polymerization (i.e. mean polymerization degree) or molecular weight of the cellulose nanofibers may be hydrolysis. Hydrolysis promotes depolymerization of amorphous cellulose inside the cellulose nanofibers and lowers the mean polymerization degree. Simultaneously, hydrolysis also results in removal of impurities such as hemicellulose and lignin in addition to the aforementioned amorphous cellulose, so that the interior of the fiber material becomes porous.

The method of hydrolysis is not particularly restricted and may be acid hydrolysis, alkali hydrolysis, hot water decomposition, steam explosion, microwave decomposition or the like. Such methods may be used alone or in combinations of two or more. In a method of acid hydrolysis, for example, the cellulose starting material is $\alpha$-cellulose obtained as pulp from a fibrous plant, which is dispersed in an aqueous medium, and then a suitable amount of a proton acid, carboxylic acid, Lewis acid, heteropolyacid or the like is added to the dispersion and the mixture is heated while stirring, thereby allowing easy control of the mean polymerization degree. The reaction conditions such as temperature, pressure and time will differ depending on the type of cellulose, the cellulose concentration, the acid type and the acid concentration, for example, and they are appropriately adjusted so as to obtain the desired mean polymerization degree. For example, a water-soluble mineral acid solution at up to 2 mass% may be used for treatment of cellulose for 10 minutes or longer under conditions of 100°C or higher under pressure. Under such conditions, the catalyst component, such as an acid, penetrates to the cellulose nanofiber interiors and promotes hydrolysis, allowing a lower amount of catalyst component usage and easier subsequent refining. During hydrolysis, the dispersion of the cellulose starting material may contain, in addition to water, also a small amount of an organic solvent in a range that does not interfere with the effect of the invention.

Alkali-soluble polysaccharides in the cellulose nanofibers include β-cellulose and γ-cellulose, in addition to hemicellulose. Alkali-soluble polysaccharides are understood by those skilled in the art to consist of the components that are obtained as the alkali-soluble portion of holocellulose (that is, the components other than α-cellulose in the holocellulose), upon solvent extraction and chlorine treatment of a plant (such as wood).

According to one aspect, the average content of alkali-soluble polysaccharides in the cellulose nanofibers is preferably 20 mass% or lower, 18 mass% or lower, 15 mass% or lower or 12 mass% or lower with respect to 100 mass% of the cellulose nanofibers, from the viewpoint of obtaining satisfactory dispersibility for the cellulose nanofibers. The content may also be 1 mass% or greater, 2 mass% or greater or 3 mass% or greater from the viewpoint of facilitating production of the cellulose nanofibers.

The average content of alkali-soluble polysaccharides can be determined by the method described in non-patent literature (Mokushitsu Kagaku Jikken Manual, ed. The Japan Wood Research Society, pp.92-97, 2000), subtracting the α-cellulose content from the holocellulose content (Wise method). In the technical field this method is considered to be a method of measuring hemicellulose content. The alkali-soluble polysaccharide content is calculated 3 times for each sample, and the number average for the calculated alkali-soluble polysaccharide contents is recorded as the average alkali-soluble polysaccharide content.

According to one aspect, the average content of acid-insoluble components in the cellulose nanofibers is preferably 10 mass% or lower, 5 mass% or lower or 3 mass% or lower with respect to 100 mass% of the cellulose nanofibers, from the viewpoint of avoiding reduction in heat resistance and resulting discoloration of the cellulose nanofibers. The content may also be 0.1 mass% or greater, 0.2 mass% or greater or 0.3 mass% or greater from the viewpoint of facilitating production of the cellulose nanofibers.

The average content of the acid-insoluble component is quantified using the Klason method, described in non-patent literature (Mokushitsu Kagaku Jikken Manual, ed. The Japan Wood Research Society, pp.92-97, 2000). In the technical field this method is considered to be a method of measuring lignin content. The sample is stirred in a sulfuric acid solution to dissolve the cellulose and hemicellulose, and then filtered with glass fiber filter paper, and the obtained residue is used as the acid-insoluble component. The acid-insoluble component content is calculated from the weight of the acid-insoluble component, and the number average of the acid-insoluble component content calculated for three samples is recorded as the average content of the acid-insoluble component.

According to one aspect, the cellulose nanofibers are chemically treated (such as by oxidizing, or chemical modification with a modifying agent). According to another aspect, the cellulose nanofibers are acylated cellulose nanofibers. As an example, Cellulose (1998)5, 153-164 describes using cellulose nanofibers obtained by oxidizing cellulose fibers with a 2,2,6,6-tetramethylpiperidin-1-oxyl radical and then subjecting them to washing and mechanical defibration.

The cellulose modifying agent used may be a compound that reacts with the hydroxyl groups of cellulose, and it may be an esterifying agent, an etherifying agent or a silylating agent. According to a preferred aspect, the chemical modification is acylation using an esterifying agent. Preferred esterifying agents are acid halides, acid anhydrides, vinyl carboxylate esters and carboxylic acids.

An acid halide may be one or more selected from the group consisting of compounds represented by the following formula.

$$R_1\text{-}C(=O)\text{-}X$$

(In the formula, $R_1$ represents an alkyl group of 1 to 24 carbon atoms, an alkenyl group of 2 to 24 carbon atoms, a cycloalkyl group of 3 to 24 carbon atoms or an aryl group of 6 to 24 carbon atoms, and X is Cl, Br or I.)

Specific examples of acid halides include acetyl chloride, acetyl bromide, acetyl iodide, propionyl chloride, propionyl bromide, propionyl iodide, butyryl chloride, butyryl bromide, butyryl iodide, benzoyl chloride, benzoyl bromide and benzoyl iodide, with no limitation to these. Acid chlorides are preferably used among these from the viewpoint of reactivity and handleability. For reaction of an acid halide, one or more alkaline compounds may also be added to neutralize the acidic by-products while simultaneously exhibiting catalytic action. Specific examples of alkaline compounds include: tertiary amine compounds such as triethylamine and trimethylamine; and nitrogen-containing aromatic compounds such as pyridine and dimethylaminopyridine; with no limitation to these.

Any suitable acid anhydride may be used as an acid anhydride. Examples include:

saturated aliphatic monocarboxylic anhydrides of acetic acid, propionic acid, (iso)butyric acid and valeric acid;
unsaturated aliphatic monocarboxylic anhydrides of (meth)acrylic acid and oleic acid;

alicyclic monocarboxylic anhydrides of cyclohexanecarboxylic acid and tetrahydrobenzoic acid;
aromatic monocarboxylic anhydrides of benzoic acid and 4-methylbenzoic acid;
dibasic carboxylic anhydrides, for example: saturated aliphatic dicarboxylic acid anhydrides such as succinic anhydride and adipic anhydride, unsaturated aliphatic dicarboxylic anhydrides such as maleic anhydride and itaconic anhydride, alicyclic dicarboxylic acid anhydrides such as 1-cyclohexene-1,2-dicarboxylic anhydride, hexahydrophthalic anhydride and methyltetrahydrophthalic anhydride, and aromatic dicarboxylic anhydrides such as phthalic anhydride and naphthalic anhydride; and
tribasic or greater polybasic carboxylic anhydrides, for example: polycarboxylic acid (anhydrides) such as trimellitic anhydride and pyromellitic anhydride.

The catalyst for reaction of an acid anhydride may be one or more types of an acidic compound such as sulfuric acid, hydrochloric acid or phosphoric acid, or a Lewis acid (such as a Lewis acid compound represented by $MY_n$ where M represents a metalloid element such as B, As or Ge, a base metal element such as Al, Bi or In, a transition metal element such as Ti, Zn or Cu, or a lanthanoid element, n represents an integer corresponding to the valence of M and is 2 or 3, and Y represents a halogen atom, OAc, $OCOCF_3$, $ClO_4$, $SbF_6$, $PF_6$ or $OSO_2CF_3(OTf)$), or an alkaline compound such as triethylamine or pyridine.

Preferred vinyl carboxylate esters are vinyl carboxylate esters represented by the following formula:

$$R\text{-}COO\text{-}CH=CH_2$$

{where R is an alkyl group of 1 to 24 carbon atoms, an alkenyl group of 2 to 24 carbon atoms, a cycloalkyl group of 3 to 16 carbon atoms or an aryl group of 6 to 24 carbon atoms}. Vinyl carboxylate esters are more preferably one or more selected from the group consisting of vinyl acetate, vinyl propionate, vinyl butyrate, vinyl caproate, vinyl cyclohexanecarboxylate, vinyl caprylate, vinyl caprate, vinyl laurate, vinyl myristate, vinyl palmitate, vinyl stearate, vinyl pivalate, vinyl octylate, divinyl adipate, vinyl methacrylate, vinyl crotonate, vinyl pivalate, vinyl octylate, vinyl benzoate and vinyl cinnamate. For esterification reaction with a vinyl carboxylate ester, one or more catalysts selected from the group consisting of alkali metal hydroxides, alkaline earth metal hydroxides, alkali metal carbonates, alkaline earth metal carbonates, alkali metal hydrogencarbonate salts, primary to tertiary amines, quaternary ammonium salts, imidazoles and their derivatives, pyridines and their derivatives, and alkoxides, may be added.

Alkali metal hydroxides and alkaline earth metal hydroxides include sodium hydroxide, potassium hydroxide, lithium hydroxide, calcium hydroxide and barium hydroxide. Alkali metal carbonates, alkaline earth metal carbonates and alkali metal hydrogencarbonate salts include lithium carbonate, sodium carbonate, potassium carbonate, cesium carbonate, magnesium carbonate, calcium carbonate, barium carbonate, lithium hydrogencarbonate, sodium hydrogencarbonate, potassium hydrogencarbonate and cesium hydrogencarbonate.

Primary to tertiary amines are primary amines, secondary amines and tertiary amines, specific examples of which include ethylenediamine, diethylamine, proline, N,N,N',N'-tetramethylethylenediamine, N,N,N',N'-tetramethyl-1,3-propanediamine, N,N,N',N'-tetramethyl-1,6-hexanediamine, tris(3-dimethylaminopropyl)amine, N,N-dimethylcyclohexylamine and triethylamine.

Imidazole and its derivatives include 1-methylimidazole, 3-aminopropylimidazole and carbonyldiimidazole.

Pyridine and its derivatives include N,N-dimethyl-4-aminopyridine and picoline. Alkoxides include sodium methoxide, sodium ethoxide and potassium-t-butoxide.

Carboxylic acids include one or more selected from the group consisting of compounds represented by the following formula.

$$R\text{-}COOH$$

(In the formula, R represents an alkyl group of 1 to 16 carbon atoms, an alkenyl group of 2 to 16 carbon atoms, a cycloalkyl group of 3 to 16 carbon atoms or an aryl group of 6 to 16 carbon atoms.)

Specific examples of carboxylic acids include one or more selected from the group consisting of acetic acid, propionic acid, butyric acid, caproic acid, cyclohexanecarboxylic acid, caprylic acid, capric acid, lauric acid, myristic acid, palmitic acid, stearic acid, pivalic acid, methacrylic acid, crotonic acid, pivalic acid, octylic acid, benzoic acid and cinnamic acid.

Preferred among these carboxylic acids are one or more selected from the group consisting of acetic acid, propionic acid and butyric acid, and especially acetic acid, from the viewpoint of reaction efficiency.

The catalyst for reaction of a carboxylic acid may be one or more types of an acidic compound such as sulfuric acid, hydrochloric acid or phosphoric acid, or a Lewis acid (such as a Lewis acid compound represented by $MY_n$ where M represents a metalloid element such as B, As or Ge, a base metal element such as Al, Bi or In, a transition metal element such as Ti, Zn or Cu, or a lanthanoid element, n represents an integer corresponding to the valence of M and is 2 or 3, and Y represents a halogen atom, OAc, $OCOCF_3$, $ClO_4$, $SbF_6$, $PF_6$ or $OSO_2CF_3$(OTf)), or an alkaline compound such as triethylamine or pyridine.

Particularly preferred among these esterification reactants are one or more selected from the group consisting of acetic anhydride, propionic anhydride, butyric anhydride, vinyl acetate, vinyl propionate, vinyl butyrate and acetic acid, among which acetic anhydride and vinyl acetate are especially preferred from the viewpoint of reaction efficiency.

The degree of modification of chemically modified cellulose nanofibers of the embodiment is represented as the average degree of substitution of hydroxyl groups (the average number of hydroxyl groups replaced per glucose molecule, as the basic structural unit of cellulose, or "DS"). According to one aspect, the DS of the chemically modified cellulose nanofibers is preferably 0.01 to 2.0. If DS is 0.01 or greater it will be possible to obtain a resin composition containing chemically modified microcellulose with a high thermal decomposition initiation temperature. If it is 2.0 or lower, on the other hand, the unmodified cellulose backbone will remain in the chemically modified microcellulose, making it possible to obtain a resin composition containing chemically modified microcellulose which exhibits both the high tensile strength and dimensional stability of the cellulose and the high thermal decomposition initiation temperature provided by chemical modification. The DS is more preferably 0.05 or greater, 0.1 or greater, 0.2 or greater, 0.3 or greater or 0.5 or greater, and more preferably 1.8 or lower, 1.5 or lower or 1.3 or lower. According to a particularly preferred aspect, the cellulose nanofibers are acylated cellulose nanofibers with an acylation degree of 0.5 to 1.5.

When the modifying groups on the chemically modified cellulose nanofibers are acyl groups, the degree of acyl substitution (DS) can be calculated based on the peak intensity ratio between the acyl group-derived peak and the cellulose backbone-derived peak, in the reflective infrared absorption spectrum of the esterified cellulose nanofibers. The peak of the absorption band for C=O based on acyl groups appears at 1730 $cm^{-1}$, while the peak of the absorption band for C-O based on the cellulose backbone chain appears at 1030 $cm^{-1}$. The DS of esterified cellulose nanofibers can be calculated using the calibration curve based on:

$$\text{Degree of substitution DS} = 4.13 \times \text{IR index (1030)},$$

derived from a correlation graph drawn between DS obtained from solid NMR measurement of the esterified cellulose nanofibers described below, and the modification rate (IR index 1030), defined by the ratio of the peak intensity of the absorption band for C=O based on acyl groups with respect to the peak intensity of the absorption band for C-O of the cellulose backbone chain.

The method of determining DS of the esterified cellulose nanofibers by solid NMR may be performing $^{13}$C solid NMR measurement of the freeze-shattered esterified cellulose nanofibers, and calculating the value by the following formula using the area intensity (Inf) of the signal attributed to one carbon atom of the modifying group, with respect to the total area intensity (Inp) of the signals attributed to C1-C6 carbons of the pyranose rings of cellulose, appearing in the range of 50 ppm to 110 ppm.

$$\text{DS} = (\text{Inf}) \times 6/(\text{Inp})$$

For example, when the modifying group is acetyl, the signal at 23 ppm attributed to $-CH_3$ may be used.

The conditions for the $^{13}$C solid NMR measurement may be as follows, as an example.

Apparatus: Bruker Biospin Avance 500WB
Frequency: 125.77 MHz
Measuring method: DD/MAS
Latency time: 75 sec
NMR sample tube: 4 mm$\varphi$
Number of scans: 640 (~14 hr)
MAS : 14,500 Hz
Chemical shift reference: glycine (external reference: 176.03 ppm)

The DS heterogeneity ratio (DSs/DSt), defined as the ratio of the degree of substitution (DSs) on the fiber surfaces with respect to the degree of substitution (DSt) for the entire chemically modified cellulose nanofibers (same definition as DS), is preferably 1.05 or greater. A larger value for the DS heterogeneity ratio corresponds to a more non-uniform structure similar to a sheath-core structure (that is, while the fiber surfaces are highly chemically modified, the center sections of the fibers maintain the original largely unmodified cellulose structure), which helps to provide the high tensile strength and dimensional stability of cellulose while improving the affinity with the resin during compositing with the resin, and improving the dimensional stability of the resin composition. The DS heterogeneity ratio is more preferably 1.1 or greater, 1.2 or greater, 1.3 or greater, 1.5 or greater or 2.0 or greater, while from the viewpoint of facilitating production of chemically modified cellulose nanofibers, it is preferably 30 or lower, 20 or lower, 10 or lower, 6 or lower, 4 or lower or 3 or lower.

The DSs value is more preferably 0.1 or greater, 0.2 or greater, 0.3 or greater or 0.5 or greater, and preferably 3.0 or lower, 2.5 or lower, 2.0 or lower, 1.5 or lower, 1.2 or lower or 1.0 or lower, for example, although this will differ depending on the degree of modification of the chemically modified cellulose nanofibers. The preferred range for DSt is as described above for DS.

A smaller coefficient of variation (CV) for the DS heterogeneity ratio of the chemically modified cellulose nanofibers is preferred for lower variation in the physical properties of the resin composition. The coefficient of variation is preferably 50% or lower, 40% or lower, 30% or lower or 20% or lower. The coefficient of variation may be lowered, for example, by a method of chemical modification after defibration of the cellulose starting material to obtain chemically modified cellulose nanofibers (sequential method), while it is raised by a method of simultaneous defibration and chemical modification of the cellulose starting material (simultaneous method). While the action mechanism for this is not completely understood, it is believed that in the simultaneous method, chemical modification proceeds further with the narrow fibers that are initially formed by defibrating, while reduction in hydrogen bonding between the cellulose microfibrils due to the chemical modification results in further defibration and leads to a larger coefficient of variation of the DS heterogeneity ratio.

The coefficient of variation (CV) of the DS heterogeneity ratio can be obtained by sampling 100 g of the aqueous dispersion of the chemically modified cellulose nanofibers (solid content: $\geq$10 mass%), using 10 g each of the freeze-shattered substance as measuring samples, calculating the DS heterogeneity ratio from DSt and DSs for the 10 samples, and calculating by the following formula from the standard deviation ($\sigma$) and arithmetic mean ($\mu$) of the DS heterogeneity ratio between the 10 samples.

$$\text{DS heterogeneity ratio} = \text{DSs/DSt}$$

$$\text{Coefficient of variation (\%)} = \text{Standard deviation } \sigma/\text{arithmetic mean } \mu \times 100$$

The method of calculating DSs is as follows. Specifically, powdered chemically modified cellulose nanofibers obtained by freeze-pulverizing are placed on a 2.5 mm$\varphi$ dish-shaped sample stand and the surface is pressed flat and measured by X-ray photoelectron spectroscopy (XPS). The XPS spectrum reflects the structural elements and chemically bonded state of the sample surface layer alone (typically about several nanometers). The obtained C1s spectrum is analyzed by peak separation, and calculation is performed by the following formula using the area intensity (Ixf) of the peak attributed to one carbon atom of the modifying group, with respect to the area intensity (Ixp) of the peak attributed to the C2-C6 carbons of the pyranose rings of cellulose (289 eV, C-C bond).

$$\text{DSs} = (\text{Ixf}) \times 5/(\text{Ixp})$$

For example, when the modifying group is acyl, the C1s spectrum is analyzed by peak separation at 285 eV, 286 eV, 288 eV and 289 eV, and the peak at 289 eV may be used for Ixp while the peak due to acyl group O-C=O bonds (286 eV) may be used for Ixf.

The conditions for XPS measurement are the following, as an example.

Device: VersaProbe II by Ulvac-Phi, Inc.
Excitation source: mono. AlK$\alpha$ 15 kV $\times$ 3.33 mA
Analysis size: ~200 $\mu$m$\varphi$
Photoelectron take-off angle: 45°
Capture range
Narrow scan: C 1s, O 1s
Pass Energy: 23.5 eV

<Polyacetal resin>

A polyacetal resin is a polymer compound having an oxymethylene group ($-OCH_2-$) as the main structural unit, and it is typically a polyacetal homopolymer essentially consisting of only repeating oxymethylene units, or a polyacetal copolymer comprising oxymethylene units and other monomer units. Polyacetal resins include copolymers with a branched structure and/or crosslinked structure introduced by copolymerization of a branch-forming component and/or a crosslink-forming component, and block copolymers or graft copolymers having a polymer unit consisting of repeated oxymethylene groups, and another polymer unit.

Polyacetal homopolymers are generally produced by polymerization of one or more monomers selected from among anhydrous formaldehyde and cyclic oligomers of formaldehyde such as trioxane (cyclic trimer of formaldehyde) or tetraoxane (cyclic tetramer of formaldehyde). The polymerization ends are usually esterified for stabilization against thermal decomposition.

A polyacetal copolymer is generally produced by copolymerization of formaldehyde and/or a cyclic oligomer of formaldehyde represented by the general formula $(CH_2O)_n$ [where n is an integer of 3 or greater] (such as trioxane), and a comonomer such as a cyclic ether and/or cyclic formal (for example, a glycol of ethylene oxide, propylene oxide, epichlorohydrin, 1,3-dioxolane or 1,4-butanediolformal, or a cyclic formal of diglycol). The unstable portions at the ends are usually removed by hydrolysis for stabilization against thermal decomposition.

A polyacetal copolymer may also be a branched polyacetal copolymer obtained by copolymerization of a monomer and/or cyclic oligomer of formaldehyde and a monofunctional glycidyl ether; or a polyacetal copolymer with a crosslinked structure, obtained by copolymerization of a monomer and/or cyclic oligomer of formaldehyde and a polyfunctional glycidyl ether.

Polyacetal resins are compounds having functional groups such as hydroxyl groups at one or both ends, and examples are polyacetal homopolymers with block components, obtained by polymerization of a monomer and/or cyclic oligomer of formaldehyde in the presence of polyalkylene glycol; and polyacetal copolymers with block components, obtained by copolymerization of a monomer and/or cyclic oligomer of formaldehyde with a cyclic ether and/or cyclic formal, in the presence of a compound with functional groups such as hydroxyl groups at one or both ends, such as hydrogenated polybutadiene glycol.

Polyacetal copolymers are preferred from the viewpoint of balance between thermal stability and mechanical properties. These polyacetal resins may be used alone or in combinations of two or more.

The percentage of the structure derived from the comonomer component (such as 1,3-dioxolane) is preferably 0.01 mol% or greater, 0.05 mol% or greater, 0.1 mol% or greater or 0.2 mol% or greater, from the viewpoint of thermal stability during extrusion and shaping, and preferably 4.0 mol% or lower, 3.5 mol% or lower, 3.0 mol% or lower, 2.5 mol% or lower or 2.3 mol% or lower, from the viewpoint of mechanical strength.

The melting point of the polyacetal resin is 150°C or higher, 155°C or higher or 170°C or higher, according to one aspect, and 185°C or lower, 180°C or lower or 175°C or lower, according to another aspect. The melting point is determined using a differential scanning calorimeter (DSC), as the peak top temperature of the endothermic peak appearing upon cooling the 200°C-melted resin to 23°C at 10°C/min and then increasing the temperature from 23°C at a temperature-elevating rate of 10°C/min, or when two or more endothermic peaks are present, it is the peak top temperature of the endothermic peak furthest at the high-temperature end.

<Additional components>

The resin composition of the embodiment may further include additional components as necessary, for improved performance. Such additional components include dispersing agents; formaldehyde scavengers; formic acid scavengers; thermoplastic resins; thermoplastic elastomers; inorganic or organic fillers (such as filler components other than cellulose, and inorganic compounds such as zeolite, ceramics, talc, silica, metal oxides and metal powders); compatibilizers; plasticizers; polysaccharides such as starch and alginic acid; natural proteins such as gelatin, nikawa and casein; coloring agents (such as dyes and pigments); perfumes; flow adjusters; leveling agents; conductive agents; antioxidants; antistatic agents; weather stabilizers; ultraviolet absorbers; ultraviolet dispersing agents; release agents; lubricants; and deodorants. Such components may be used alone or in combinations of two or more. The content ratio of optional additional components in the resin composition is appropriately selected in a range that does not interfere with the desired effect of the invention, and for example, it may be 0.01 to 50 mass% or 0.1 to 30 mass%.

[Dispersing agent]

The dispersing agent is preferably a compound that can react by hydrogen bonding with the hydroxyl groups of cellulose. Preferred examples of dispersing agents include one or more selected from the group consisting of cellulose derivatives, polyalkylene oxides, amides and amines. Cellulose derivatives, which are cellulosic substances having high affinity with cellulose while also being thermoplastic resins, are preferred because they have a high effect of increasing dispersion stability of the cellulose in the resin composition is also obtained. The dispersing agent is preferably one having a higher boiling point than water. Having a higher boiling point than water means having a boiling point that is higher than the boiling point of water at each pressure on a vapor pressure curve (100°C at below 1 atmosphere, for example).

The amount of dispersing agent with respect to 100 parts by mass of the cellulose nanofibers in the resin composition is preferably 1 part by mass or greater, 5 parts by mass or greater, 10 parts by mass or greater or 20 parts by mass or greater, from the viewpoint of satisfactory dispersion of the cellulose and formation of a network, and preferably 500 parts by mass or lower, 300 parts by mass or lower or 200 parts by mass or lower, from the viewpoint of reducing variation in the resin composition performance.

[Formaldehyde scavenger]

A polyacetal resin decomposes to form formaldehyde, the formaldehyde in turn promoting further decomposition of the polyacetal resin. A formaldehyde scavenger helps to inhibit further decomposition of the polyacetal resin by scavenging the formaldehyde. Formaldehyde scavengers include aminotriazine compounds, guanamine compounds, urea derivatives, hydrazide compounds, amide compounds (such as acrylamide polymers) and polyamides, any of which may be used alone or in combinations of two or more. According to a preferred aspect, the formaldehyde scavenger is at least one type selected from the group consisting of aminotriazine compounds, guanamine compounds, hydrazide compounds and polyamides.

Examples of aminotriazine compounds include melamine, 2,4-diamino-sym-triazine, 2,4,6-triamino-sym-triazine, N-butylmelamine, N-phenylmelamine, N,N-diphenylmelamine, N,N-diallylmelamine, benzoguanamine(2,4-diamino-6-phenyl-sym-triazine), acetoguanamine(2,4-diamino-6-methyl-sym-triazine) and 2,4-diamino-6-butyl-sym-triazine.

Guanamine compounds include aliphatic guanamine-based compounds (such as monoguanamines and alkylenebisguanamines), alicyclic guanamine-based compounds (such as monoguanamines), aromatic guanamine-based compounds [for example, monoguanamines (such as benzoguanamines and their functional group-substituted forms), $\alpha$- and $\beta$-naphthoguanamines and their functional group-substituted derivatives, polyguanamines and aralkyl or aralkyleneguanamines], heteroatom-containing guanamine-based compounds [for example, acetal group-containing guanamines, tetraoxospiro ring-containing guanamines (such as CTU-guanamine and CMTU-guanamine), isocyanuric ring-containing guanamines and imidazole ring-containing guanamines].

Examples of urea derivatives include N-substituted urea, urea condensates, ethyleneurea, hydantoin compound and ureido compounds.

Examples of N-substituted urea compounds include methylurea compounds with substituents such as alkyl groups, alkylenebisurea compounds, and aryl-substituted urea compounds.

Examples of urea condensates include condensates of urea and formaldehyde.

Examples of hydantoin compounds include hydantoin, 5,5-dimethylhydantoin and 5,5-diphenylhydantoin.

Allantoin is an example of a ureido compound.

Hydrazide compounds may be mono or dihydrazide compounds of carboxylic acid synthesized by reaction of carboxylic acid (with aromatic and/or alicyclic groups) with hydrazine, and alkyl group-substituted mono or dihydrazide compounds. The carboxylic acid of a mono or dihydrazide compound of carboxylic acid may be a monocarboxylic acid or dicarboxylic acid, and either saturated or unsaturated.

Examples of monocarboxylic acids include formic acid, acetic acid, propionic acid, butyric acid, valeric acid, caproic acid, enanthic acid, caprylic acid, lauric acid, myristic acid, palmitic acid, margaric acid, stearic acid and behenic acid. Examples of dicarboxylic acids include oxalic acid, malonic acid, succinic acid, glutaric acid, adipic acid, pimelic acid, suberic acid, azelaic acid, sebacic acid, benzoic acid, phthalic acid, isophthalic acid, terephthalic acid, naphthalic acid, salicylic acid, gallic acid, mellitic acid, cinnamic acid, pyruvic acid, lactic acid, malic acid, citric acid, fumaric acid, maleic acid, aconitic acid, amino acids and nitrocarboxylic acid. Examples of unsaturated carboxylic acids include oleic acid, linoleic acid, linolenic acid, arachidonic acid, docosahexaenoic acid and eicosapentaenoic acid.

Examples of mono(di)hydrazide compounds of carboxylic acid synthesized using these carboxylic acids include carbodihydrazine, oxalic acid mono(di)hydrazide, malonic acid mono(di)hydrazide, succinic acid mono(di)hydrazide, glutaric acid mono(di)hydrazide, adipic acid mono(di)hydrazide, sebacic acid mono(di)hydrazide, lauric acid mono(di)hydrazide, malic acid dihydrazide, tartaric acid dihydrazide, propionic acid monohydrazide, lauric acid monohydrazide, stearic acid monohydrazide, phthalic acid dihydrazide, isophthalic acid dihydrazide, terephthalic acid dihydrazide, 2,6-naphthalic acid dihydrazide, p-hydroxybenzoic hydrazine, p-hydroxybenzoic hydrazine, 1,4-cyclohexanedicarboxylic dihydrazine, acetohydrazide, acrylohydrazide, maleic acid dihydrazide, fumaric acid dihydrazide, benzohydrazide, nicotinohydrazide, isonicotinohydrazide, isobutylhydrazine and oleic acid hydrazide.

Preferred among these carboxylic acids are dicarboxylic acids such as adipic acid, sebacic acid and lauric acid, with adipic acid mono(di)hydrazide, sebacic acid mono(di)hydrazide and lauric acid mono(di)hydrazide being the most preferred carboxylic acid hydrazide compounds.

If the proportion of monohydrazide compounds and dihydrazide compounds among these carboxylic acid hydrazide compounds is within a specified range, it will be possible to inhibit generation of carbides and decomposition products during prolonged continuous molding, and to inhibit fouling of the die. The content of carboxylic acid monohydrazide compounds is preferably in the range of 0.0001 to 1.0 mass% with respect to 100 mass% as the total of carboxylic acid monohydrazide compounds and carboxylic acid dihydrazide compounds. The content is more preferably in the range of 0.0001 to 0.5 mass% and even more preferably 0.0001 to 0.1 mass%.

The method of adjusting the content of carboxylic acid monohydrazide compounds may be a method of adjustment by adding a monohydrazide compound to a carboxylic acid dihydrazide compound, or a method of adjusting the synthesis reaction conditions during reaction between the carboxylic acid and hydrazine. Synthesis reaction between a carboxylic acid and hydrazine generates a monohydrazide compound as an intermediate. Washing removal of the monohydrazide compound allows the monohydrazide compound content to be adjusted.

Examples of amide compounds include multivalent amide carboxylates such as diamide isophthalate, and anthranilamide and acrylamide polymers.

An acrylamide polymer is preferably one that is particulate with a primary amide group content of 30 to 70 mol% and a mean particle size of 0.1 to 10 $\mu$m. A preferred acrylamide polymer is a crosslinked acrylamide polymer having a mean particle size of 10 $\mu$m or smaller. More preferred are acrylamide polymers with a mean particle size of 5 $\mu$m or smaller, and most preferred are crosslinked acrylamide polymers with a mean particle size of 3 $\mu$m or smaller.

Polyamides include polyamides derived from diamines and dicarboxylic acids; polyamides obtained by combining aminocarboxylic acids and diamines and/or dicarboxylic acids as necessary; and polyamides derived by combining lactams and diamines with diamines and/or dicarboxylic acids as necessary. A polyamide may be a copolymerized polyamide formed by two or more polyamide-forming components.

The melting point of the polyamide is preferably 240°C or higher, more preferably 245°C or higher and even more preferably 250°C or higher. By using a polyamide with a melting point of 240°C or higher it is possible to obtain a polyacetal resin composition that is superior in terms of the mold depositing property and change in color difference after standing in a molding machine.

Polyamides with melting points of 240°C or higher include polyamide 66, polyamide46, polyamide 66/6T and polyamide 66/6I/6T. Of these polyamides, polyamide 66, polyamide 66/6T and polyamide 66/6I/6T are preferred, and polyamide 66 is more preferred.

The amount of formaldehyde scavenger in the resin composition with respect to 100 parts by mass of the polyacetal resin is preferably 0.01 parts by mass or greater, 0.02 parts by mass or greater or 0.03 parts by mass or greater, and preferably 3 parts by mass or lower, 2 parts by mass or lower or 1 part by mass or lower.

The amount of formaldehyde scavenger in 100 mass% of the resin composition is preferably 0.001 mass% or greater, 0.005 mass% or greater or 0.01 mass% or greater, and preferably 1.5 mass% or lower, 1.2 mass% or lower or 1.0 mass% or lower.

[Formic acid scavenger]

When a polyacetal resin decomposes to generate formaldehyde, the formaldehyde is readily oxidized to formic acid. The formic acid can further promote decomposition of the polyacetal resin, similar to formaldehyde. A formic acid scavenger helps to inhibit further decomposition of the polyacetal resin by scavenging the formic acid. Examples of formic acid scavengers include, but are not limited to, hydroxides, inorganic acid salts, carboxylates and alkoxides of alkali metals or alkaline earth metals. Specific examples include hydroxides of sodium, potassium, magnesium, calcium and barium; and carbonates, phosphates, silicates, borates, carboxylates and layered double hydroxides of the same metals.

The carboxylic acid of a carboxylate is preferably a saturated or unsaturated aliphatic carboxylic acid having 10 to 36 carbon atoms, the carboxylic acid optionally being substituted with a hydroxyl group. Examples of saturated and unsaturated aliphatic carboxylates include, but are not limited to, calcium dimyristate, calcium dipalmitate, calcium distearate, calcium (myristate-palmitate), calcium (myristate-stearate), calcium (palmitate-stearate) and calcium 12-hydroxystearate, among which calcium dipalmitate, calcium distearate and calcium 12-hydroxydistearate are preferred.

These formic acid scavengers may be used alone or in combinations of two or more.

The amount of formic acid scavenger in the resin composition with respect to 100 parts by mass of the polyacetal resin is preferably 0.01 parts by mass or greater, 0.02 parts by mass or greater or 0.03 parts by mass or greater, and preferably 3 parts by mass or lower, 2 parts by mass or lower or 1 part by mass or lower.

The amount of formic acid scavenger in 100 mass% of the resin composition is preferably 0.001 mass% or greater, 0.005 mass% or greater or 0.01 mass% or greater, and preferably 1.5 mass% or lower, 1.2 mass% or lower or 1.0 mass% or lower.

[Usage amount of formaldehyde scavenger and formic acid scavenger]

According to one aspect, the amount of formaldehyde scavenger or formic acid scavenger is preferably adjusted according to the moisture content in the kneading component or resin composition. Since decomposition of a polyacetal resin is promoted by the presence of water, it is generally preferred to use a larger amount of formaldehyde scavenger or formic acid scavenger when the system has a high moisture content in the system. From the viewpoint of the physical properties of the resin composition, the formaldehyde scavenger or formic acid scavenger is preferably not present in an excessive amount in the kneading component or resin composition. According to one aspect, since the moisture content in the kneading component or resin composition is mainly derived from the cellulose nanofibers, the amount of formaldehyde scavenger or the amount of formic acid scavenger in the kneading component or resin composition is preferably adjusted depending on the moisture content derived from the cellulose nanofibers in the kneading component or resin composition.

According to one aspect, the formaldehyde scavenger content a1 [mass%] of the total kneading component, the cellulose nanofiber moisture content b [mass%] supplied to melt kneading, and the cellulose nanofiber content c [mass%] of the total kneading component, satisfy the following relationship:

$$b \times c \times 0.00012 + 0.04 \leq a1 \leq b \times c \times 0.015 + 0.2.$$

As a result of much experimentation, the present inventors have found that when the formaldehyde scavenger content a1 is within the aforementioned range, decomposition of the polyacetal resin is satisfactorily inhibited by the formaldehyde scavenger, while progressive decomposition and impairment of physical properties due to the presence of excess formaldehyde scavenger can be reduced.

According to one aspect, the formic acid scavenger content a2 [mass%] of the total kneading component, the cellulose nanofiber moisture content b [mass%] supplied to melt kneading, and the cellulose nanofiber content c [mass%] of the total kneading component, satisfy the following relationship:

$$b \times c \times 0.00012 + 0.04 \leq a2 \leq b \times c \times 0.015 + 0.2.$$

As a result of much experimentation, the present inventors have found that when the formic acid scavenger content a2 is within the aforementioned range, decomposition of the polyacetal resin is satisfactorily inhibited by the formic acid scavenger, while progressive decomposition and impairment of physical properties due to the presence of excess formic acid scavenger can be reduced.

<Production of resin composition>

The resin composition can be produced by a method that includes a step of melt kneading the cellulose nanofibers and polyacetal resin. According to a typical aspect, the dispersion (slurry) containing the cellulose nanofibers may be dried to obtain a dried body, and the dried body may then be melt kneaded with a polyacetal resin, by the procedure described below.

[Preparation of slurry]

According to one aspect, the cellulose nanofibers may be prepared as a slurry where they are dispersed in a liquid medium. The slurry may include the cellulose nanofibers, a solvent, and optionally additional components (such as a dispersing agent). The liquid medium used may be water or an aprotic solvent as described above. From the viewpoint of process efficiency during the subsequent drying, the concentration of the cellulose nanofibers in the slurry is preferably 5 mass% or greater, 10 mass% or greater, 15 mass% or greater, 20 mass% or greater or 25 mass% or greater, and from the viewpoint of avoiding excessive increase in the slurry viscosity and its solidification by aggregation to maintain satisfactory handleability, it is preferably 60 mass% or lower, 55 mass% or lower, 50 mass% or lower or 45 mass% or lower.

[Formation of dried body]

The slurry may be dried to prepare a dried body. A mixer may be used for drying, but a mechanical agitation mixing granulator is preferred since it allows drying to be carried out at a relatively high shear rate. According to one aspect, the drying is carried out in a batch process using a mechanical agitation mixing granulator. The mechanical agitation mixing granulator may be a commercial product, and an example is a flow mixer type, which may be an apparatus comprising a stirring blade and chopper blade in a mixer body, such as a Loedige mixer (by Matsubo Corp., for example) or a high-speed vacuum dryer (by EarthTechnica Co., Ltd., for example), or an apparatus comprising multiple stirring blades (typically an upper and lower blade) in a mixer body, such as a Henschel mixer (FM mixer) (by Nippon Coke & Engineering Co., Ltd., for example). Appropriate control of the drying conditions, namely the shear rate, drying speed, drying temperature and/or pressure (pressure reduction), may be useful for producing a dried body of the disclosure. For example, rotating/revolving mixing and vacuum drying may be carried out simultaneously.

Drying may be stopped when the cellulose nanofibers have been dried to a degree with the desired moisture content for melt kneading with the polyacetal resin.

The drying temperature may be 20°C or higher, 30°C or higher, 40°C or higher or 50°C or higher, for example, from the viewpoint of drying efficiency and of easily forming a dried body with the desired moisture content, and may also be 160°C or lower, 150°C or lower, 140°C or lower, 130°C or lower or 100°C or lower, for example, from the viewpoint of reducing heat degradation of the cellulose nanofibers and additional components and of avoiding excessive micronization of the dried body by rapid drying of the slurry. The drying temperature is the temperature of the heat source that is contacted with the slurry, and it is defined as the surface temperature of the temperature control jacket of the drying apparatus, the surface temperature of the heating cylinder, or the temperature of the hot air, for example.

The drying may also be carried out under reduced pressure. In this case the pressure reduction may be -1 kPa or lower, -10 kPa or lower, -20 kPa or lower, -30 kPa or lower, -40 kPa or lower or -50 kPa or lower, from the viewpoint of drying efficiency and of easily forming a dried body with the desired moisture content, and -100 kPa or greater, -95 kPa or greater or -90 kPa or greater from the viewpoint of avoiding excessive micronization of the dried body by rapid drying of the slurry. The pressure may be adjusted by full operation of a vacuum pump with an appropriate exhaust capacity, or by intentionally introducing air and/or an inert gas using a vacuum regulator or leak valve. When air and/or an inert gas is to be introduced, it is preferred to provide an intake unit in the canister or upstream from the canister of the drying apparatus, to allow efficient exhaust of medium vapor.

During the drying step, the residence time of the slurry at a temperature of 40°C to 100°C is preferably 30 minutes to 600 minutes, 45 minutes to 300 minutes or 60 minutes to 200 minutes. Drying under these conditions satisfactorily produces a dried body with the desired moisture content.

<Melt kneading>

The dried body of the cellulose nanofibers obtained in this manner may be melt kneaded with the polyacetal resin and optional additional components. The melt kneading method may be:

a method of mixing a resin monomer with the dried body for polymerization reaction, extruding the obtained resin composition into a strand, cooling to solidification in a water bath and obtaining molded pellets,
a method of melt kneading a mixture of the resin and dried body using a single-screw or twin-screw extruder, extruding it into a strand, cooling to solidification in a water bath and obtaining molded pellets,
a method of melt kneading a mixture of the resin and dried body using a single-screw or twin-screw extruder and extruding and cooling it into the form of a rod or tube to obtain an extruded body, and
a method of melt kneading a mixture of the resin and dried body using a single-screw or twin-screw extruder and extruding it with a T-die to obtain a molded sheet or film. According to a preferred aspect, a single-screw or twin-screw extruder is used for melt kneading of a mixture of the resin and dried body, extrusion into a strand, cooling solidification of the strand in a water bath and obtaining molded pellets.

For example, the dried body conveyed in the desired proportion with respect to the resin may be loaded into the resin and mixed, prior to melt kneading.

By melt kneading while maintaining the cellulose nanofiber moisture content in a specified range, it is possible to control the moisture content in the resin composition to a specified range during the melt kneading. The moisture content of the resin composition during melt kneading is usually constant. For example, the cellulose nanofiber moisture content may be controlled by vacuum drying after formation of the dried body of the cellulose nanofibers and before melt kneading, such as immediately before loading of the cellulose nanofiber into the extruder.

The polyacetal resin supplied to melt kneading will generally contain virtually no moisture. The moisture content of the polyacetal resin may be 0.2 mass% or lower, 0.15 mass% or lower or 0.1 mass% or lower, or 0.0001 mass% or greater or 0.001 mass% or greater from the viewpoint of facilitating process control, for example.

While either a single-screw extruder or a twin-screw extruder may be used for the melt kneading, a twin-screw extruder is preferred to control the dispersibility of the cellulose nanofibers. The ratio LID of the cylinder length (L) of the extruder divided by the screw diameter (D) is preferably 30 or greater and most preferably 40 or greater. The screw rotational speed during kneading is preferably in the range of 50 to 800 rpm and more preferably in the range of 100 to 600 rpm.

Each of the screws in the cylinder of the extruder is optimized by combination of the kneading elements, i.e. an elliptical double-threaded transport screw and a kneading disc.

The minimum processing temperature recommended by thermoplastic resin suppliers is 170°C to 190°C for polyacetal resins. The heating preset temperature is preferably in a range of 20°C higher than the recommended minimum processing temperature. Setting the mixing temperature to within this range will allow the cellulose nanofibers and the resin to be uniformly mixed.

According to one aspect, a portion of the resin composition obtained by melt kneading may be resupplied to melt kneading as a portion of the kneading component. This makes it possible to recycle part of the trimmings or scrap material produced during molding of the resin composition, as material for the resin composition, thereby aiding in cost reduction due to reduction in waste. From the viewpoint of satisfactory recycling efficiency, the mass ratio of the portion derived from the resin composition in 100 mass% of the kneading component is preferably 5 mass% or greater, 10 mass% or greater or 15 mass% or greater, and from the viewpoint of satisfactorily maintaining the desired properties of the resin composition, it is preferably 65 mass% or lower, 60 mass% or lower or 50 mass% or lower.

The resin composition of the embodiment may be provided in a variety of different forms. Specifically, it may be in the form of pellets, a sheet, fiber, plates or rods, with the form of pellets being more preferred for easier post-working and easier transport.

<Pellets and pellet container>

One aspect of the invention provides pellets of the resin composition of the embodiment. The preferred form of pellets is round, elliptical or cylindrical, with the shape differing depending on the system used for cutting during extrusion. For example, pellets cut by the method known as "underwater cutting" are usually round, pellets cut by the method known as "hot cutting" are usually round or elliptical, and pellets cut by the method known as "strand cutting" are usually cylindrical. The preferred pellet diameter for round pellets is 1 mm to 3 mm. The preferred diameter for cylindrical pellets is 1 mm to 3 mm, and the preferred length is 2 mm to 10 mm. The diameter and length are preferably above these specified lower limits from the viewpoint of operational stability during extrusion, and they are preferably lower than the specified upper limits from the viewpoint of seizing in the molding machine in post-working.

Another aspect of the invention provides pellets of the resin composition comprising cellulose nanofibers and a polyacetal resin, and a pellet container consisting of a container housing the pellets. According to one aspect, the pellets in the pellet container are pellets of the resin composition of the embodiment, and therefore have one or more of the properties of the resin composition and pellets disclosed herein. For example, according to one aspect, the moisture content of the pellets (in the case of pellets in a pellet container, the pellets immediately after removal from the container) is 0.3 mass% or lower, 0.29 mass% or lower or 0.28 mass% or lower, and according to another aspect it is 0.03 mass% or higher, 0.04 mass% or higher or 0.05 mass% or higher.

The moisture content after the pellets of the embodiment (in the case of pellets in a pellet container, the pellets immediately after removal from the container) have been allowed to stand for 48 hours at 40°C under saturated water vapor pressure, is 0.3 mass% or higher, 0.4 mass% or higher, 0.5 mass% or higher, 0.6 mass% or higher or 0.7 mass% or higher, according to one aspect, and 5.0 mass% or lower, 4.0 mass% or lower or 3.0 mass% or lower, according to another aspect.

According to one aspect, the container of the pellet container is composed of a material having a water vapor permeability of preferably 1 g/(m$^2$·24 h) or lower, 0.5 g/(m$^2$·24 h) or lower or 0.1 g/(m$^2$·24 h) or lower, at 40% relative humidity and a temperature of 90°C. The material may be a polyolefin and/or a metal (most preferably aluminum), for example. For the purpose of the disclosure, the water vapor permeability is that measured according to JIS Z0208.

The container preferably has sealing means. The sealing means may be solvent bonding, heat welding, high-frequency welding, laser welding or a ziplock, and is preferably heat welding with a heat sealer. According to a preferred aspect, the container is a packaging bag.

Since polyacetal resins are not conventionally associated with problems of moisture absorption during storage, no special consideration has been given to the storage conditions for polyacetal resins. In the pellet container of the present embodiment, the pellets, which are of a polyacetal resin-containing resin composition, are stored in a sealed state in an environment cut off from external air, in contravention of common technical knowledge, thereby making it possible to inhibit reduction in molecular weight resulting from decomposition of the polyacetal resin by moisture, which has not been expected in the prior art, and helping to inhibit generation of odor and gas from the resin composition, and formation of voids in molded articles.

<Kneaded blend of resin composition, and molded article>

The resin composition of the embodiment can be utilized for a variety of molded articles. There are no particular restrictions on the method of producing the molded article, and any production method may be employed, such as injection molding, extrusion molding, blow molding, inflation molding or foam molding. Injection molding is most preferred among these from the viewpoint of designability and cost.

If the moisture content of the resin composition of the embodiment is controlled to the range specified above, it will be possible to inhibit decomposition of the polyacetal resin by melt kneading during production of the resin composition, and also to inhibit decomposition of the polyacetal resin by heating during production of a kneaded blend by hot kneading of the resin composition, or during production of a molded article by molding of the resin composition. From the viewpoint of inhibiting decomposition of the polyacetal resin during kneading or during molding, the resin composition may be further dried after its production. After it has been stored in a state with a high moisture content, the resin composition may be dried to the moisture content specified according to the embodiment. By providing the dried resin composition to hot kneading or hot molding, it is possible to obtain a kneaded blend or molded article with inhibited decomposition of the polyacetal resin.

Another aspect of the invention provides a method for producing a molded article of a resin composition comprising cellulose nanofibers and a polyacetal resin, wherein the method includes a step of obtaining a resin composition comprising cellulose nanofibers and a polyacetal resin, and a step of molding the resin composition to obtain a molded article, and wherein the resin composition is molded with the moisture content of the resin composition at 0.3 mass% or lower, and especially 0.03 mass% or greater and 0.3 mass% or lower.

One aspect of the invention provides a method for producing a kneaded blend of a resin composition comprising cellulose nanofibers and a polyacetal resin, wherein the method includes a storage step in which a resin composition comprising cellulose nanofibers and a polyacetal resin is stored with a moisture content of greater than 0.3 mass%, a drying step in which the stored resin composition is dried at a temperature Td which is a temperature of at least 70°C lower than the melting point Tm of the polyacetal resin, to a moisture content of 0.3 mass% or lower, and especially 0.03 mass% or higher and 0.3 mass% or lower, and a heating step in which the resin composition that has reached a moisture content of 0.3 mass% or lower, and especially 0.03 mass% or higher and 0.3 mass% or lower in the drying step, is hot kneaded. The hot kneading temperature is 175°C or higher, 180°C or higher or 190°C or higher, according to one aspect, and 230°C or lower, 220°C or lower or 210°C or lower, according to another aspect.

Another aspect of the invention provides a method for producing a molded article of a resin composition comprising cellulose nanofibers and a polyacetal resin, wherein the method includes a storage step in which a resin composition comprising cellulose nanofibers and a polyacetal resin is stored with a moisture content of greater than 0.3 mass%, a drying step in which the stored resin composition is dried at a temperature Td which is a temperature of at least 70°C lower than the melting point Tm of the polyacetal resin, to a moisture content of 0.3 mass% or lower, and especially 0.03 mass% or higher and 0.3 mass% or lower, and a molding step in which the resin composition that has reached a moisture content of 0.3 mass% or lower, and especially 0.03 mass% or higher and 0.3 mass% or lower in the drying step, is hot molded. The molding temperature is 175°C or higher, 180°C or higher or 190°C or higher, according to one aspect, and 230°C or lower, 220°C or lower or 210°C or lower, according to another aspect.

Even if the resin composition has reached a high moisture content in the storage step described above, it is possible to produce a kneaded blend and molded article with inhibited decomposition of the polyacetal resin through the drying step described above.

The difference (Tm - Td) between the melting point Tm of the polyacetal resin and the temperature Td in the drying step is preferably 70°C or greater, 75°C or greater or 80°C or greater, from the viewpoint of inhibiting decomposition of the polyacetal resin, and 120°C or less, 110°C or less or 100°C or less, from the viewpoint of drying efficiency. The drying means may be vacuum drying or hot air drying, for example.

The moisture content of the resin composition supplied to melt kneading or hot molding is 0.3 mass% or lower, 0.29 mass% or lower or 0.28 mass% or lower, according to one aspect. The moisture content of the resin composition is also 0.03 mass% or greater, 0.04 mass% or greater or 0.05 mass% or greater, according to one aspect, from the viewpoint of avoiding accelerated decomposition of the polyacetal and degradation of the cellulose nanofibers by the heat required for drying, to obtain satisfactory physical properties for the resin composition and molded article. According to one aspect, the moisture content of the resin composition supplied for hot kneading or hot molding may be constant throughout the hot kneading or hot molding. Therefore, the moisture content of the kneaded blend or molded article obtained by the respective methods described above may be the same as the moisture content of the resin composition.

<Method of storing resin composition>

One aspect of the invention provides a method of storing a resin composition wherein a resin composition comprising cellulose nanofibers and a polyacetal resin is stored in a sealed state in an environment that is not in contact with external air. The resin composition may be a resin composition according to the embodiment described above, such as resin composition pellets. According to one aspect, the environment that is not in contact with external air is an environment in which the resin composition is packaged in sealed manner so that the water vapor permeability at 40% relative humidity and a temperature of 90°C is 1 g/(m$^2$·24 h) or lower. The water vapor permeability is preferably 0.5 g/(m$^2$·24 h) or lower or 0.1 g/(m$^2$·24 h) or lower. The method of producing the environment that does not contact with external air is not particularly restricted, and for example, it may be a method in which the resin composition (in the form of resin composition pellets, for example) is housed in a container of the disclosure (for example, a packaging bag such as an aluminum bag).

Since polyacetal resins are not conventionally associated with problems of moisture absorption during storage, as mentioned above, no special consideration has been given to the storage conditions for polyacetal resins. In the method of storing a resin composition of the present embodiment, the polyacetal resin-containing resin composition is stored in a sealed state in an environment cut off from external air, as a method that departs from common technical knowledge, thereby making it possible to inhibit reduction in molecular weight resulting from decomposition of the polyacetal resin by moisture, which has not been expected in the prior art, and helping to inhibit generation of odor and gas from the resin composition, and formation of voids in molded articles.

<Use of resin composition and molded article>

The resin composition and molded article of the embodiment is useful as a substitute for steel sheets, fiber-reinforced plastics (such as carbon fiber reinforced plastics and glass fiber reinforced plastics), and inorganic filler-containing resin composites. Examples of preferred uses for the resin composition and molded article include industrial machinery parts, general machine parts, automobile/railway/vehicle/ship/aerospace-related parts, electronic and electrical components, construction and civil engineering materials, daily household items, sports and leisure goods, wind power generation case members, and container and packaging materials. The resin composition and molded article of the embodiment may be used as a combination of cellulose nanofibers with a polyacetal resin with inhibited molecular weight reduction, having excellent mechanical properties and slidability especially suited for a gear to be used in an automobile, for example.

<Properties of resin composition and molded article>

<Coefficient of variation of tensile breaking strength>

With the resin composition and molded article of the embodiment, it is possible to inhibit generation of voids in molded articles due to reduced degradation of the polyacetal resin. When voids are present in the molded article, cracks form from the voids as origins, thus producing variation in the tensile characteristics of the molded article, and therefore reducing such voids is advantageous for improving the physical properties of the molded article. The coefficient of variation of the tensile breaking strength, as an indicator of variation in tensile characteristics for a molded article, is preferably 0.1 or smaller, 0.07 or smaller or 0.05 or smaller. While a smaller coefficient of variation is preferred, according to one aspect it is 0.005 or greater, 0.01 or greater or 0.02 or greater from the viewpoint of facilitating production of the resin composition and molded article. The tensile breaking strength and coefficient of variation are the values measured by the methods described under "EXAMPLES" of the present disclosure.

<Maximum height Sz>

With the resin composition and molded article of the embodiment, it is possible to reduce generation of gas from the resin composition by inhibiting degradation of the polyacetal resin. Since gas is one cause of irregularities on the molded article surface, inhibiting generation of gas is advantageous for improving the outer appearance and physical properties of the molded article. The maximum height Sz, as an indicator of the irregularity of the molded article surface, is preferably 70 $\mu$m or lower or 50 $\mu$m or lower. While a smaller maximum height Sz is preferred, according to one aspect it is 1 $\mu$m or greater, 5 $\mu$m or greater or 10 $\mu$m or greater, from the viewpoint of facilitating production of the resin composition and molded article. The maximum height Sz is the value measured according to ISO25178, by the method described under "EXAMPLES" in the present disclosure.

EXAMPLES

Exemplary modes of the invention will now be further illustrated using Examples, with the understanding that the invention is not limited to these Examples.

<Evaluation methods>

<Cellulose nanofibers>

(Number-average fiber diameter and LID of cellulose nanofibers)

A wet cake was diluted with tert-butanol to 0.01 mass% and dispersed using a high-shear homogenizer ("ULTRA-TURRAX T18", trade name of IKA Corp.) with treatment conditions of 25,000 rpm × 5 min, cast onto mica and air-dried, and the resulting dispersion was measured with a high-resolution scanning electron microscope. The measurement was carried out with adjustment of the magnification so that at least 100 cellulose nanofibers were observable, the lengths (L) and long diameters (D) of 100 randomly selected cellulose nanofibers and their ratios were determined, and the addition average for the 100 cellulose nanofibers was calculated.

(Mw of cellulose nanofibers)

The wet cake was added to tert-butanol, and dispersed with a mixer until aggregates were no longer seen. The mixture was then prepared to a concentration of 0.5 mass% for 0.5 g of cellulose nanofiber solid weight. A 100 g portion of the obtained tert-butanol dispersion was filtered on filter paper and dried at 150°C, and then the filter paper was detached to obtain a sheet. Sheets with air permeability resistance up to 100 sec/100 ml per 10 g/m$^2$ basis weight of the sheet were obtained as porous sheets. After weighing out 0.88 g of the porous sheet and chopping it into small pieces with scissors, the pieces were gently stirred and allowed to stand for one day after addition of 20 mL of purified water. The water and solid portion were then separated by centrifugation. After then adding 20 mL of acetone, the mixture was gently stirred and allowed to stand for 1 day. The acetone and solid portion were separated by centrifugation. After then adding 20 mL of N,N-dimethylacetamide, the mixture was gently stirred and allowed to stand for 1 day. Centrifugal separation was again carried out to separate the N,N-dimethylacetamide and solid content, and then 20 mL of N,N-dimethylacetamide was added and the mixture was gently stirred and allowed to stand for 1 day. The N,N-dimethylacetamide and solid content were separated by centrifugation, 19.2 g of a N,N-dimethylacetamide solution prepared to a lithium chloride content of 8 mass% was added to the solid portion, and the mixture was stirred with a stirrer while visually confirming dissolution. The cellulose-dissolving solution was filtered with a 0.45 μm filter, and the filtrate was supplied as a sample for gel permeation chromatography. The apparatus and measuring conditions used were as follows.
Apparatus: Tosoh Corp. HLC-8120
Column: TSKgel SuperAWM-H (6.0 mm I.D. × 15 cm) × 2
Detector: RI detector
Eluent: N,N-dimethylacetamide (lithium chloride: 0.2%)
Flow rate: 0.6 mL/min
Calibration curve: Based on pullulan

(Degree of crystallinity of cellulose nanofibers)

The porous sheet was measured by X-ray diffraction and the degree of crystallinity was calculated by the following formula.

$$\text{Degree of crystallinity (\%)} = [I_{(200)} - I_{(amorphous)}]/I_{(200)} \times 100$$

$I_{(200)}$: Diffraction peak intensity at 200 plane (2θ = 22.5°) for type I cellulose crystal
$I_{(amorphous)}$: Amorphous halo peak intensity for type I cellulose crystal, peak intensity at angle of 4.5° lower than diffraction angle at 200 plane (2θ = 18.0°).
X-ray diffraction measuring conditions

Apparatus: MiniFlex (Rigaku Corp.)
Operating shaft: 2θ/θ
Source: CuKα
Measuring method: Continuous
Voltage: 40 kV
Current: 15 mA
Initial angle: 2θ = 5°
Final angle: 2θ = 30°
Sampling width: 0.020°
Scan speed: 2.0°/min
Sample: Porous sheet attached to specimen holder.

(Acetylation degree of acetylated cellulose nanofibers (DS))

The infrared spectrum of the porous sheet was measured at 5 locations by ATR-IR, using a Fourier transform infrared spectrometer (FT/IR-6200 by Jasco Corp.). The infrared spectrum was measured under the following conditions.

Number of scans: 64,
Wavenumber resolution: 4 cm$^{-1}$,
Wavenumber range: 4000 to 600 cm$^{-1}$,
ATR crystal: diamond,
Incident angle: 45°

The IR index was calculated from the obtained IR spectrum using the following formula:

$$IR\ index = H1730/H1030.$$

In the formula, H1730 and H1030 are the absorbances at 1730 cm$^{-1}$ and 1030 cm$^{-1}$ (absorption bands for C-O stretching vibration of the cellulose backbone chain). The respective baselines used were a line connecting 1900 cm$^{-1}$ and 1500 cm$^{-1}$ and a line connecting 800 cm$^{-1}$ and 1500 cm$^{-1}$, each baseline being defined as the absorbance at absorbance = 0.

The average degree of substitution at each measured location was calculated from the IR index using the following formula, and the average value was recorded as DS.

$$DS = 4.13 \times IR\ index$$

(Moisture content)

The moisture content of the cellulose nanofibers or pulp was measured under the following conditions using a heat drying moisture meter (MX-50) by A&D Co.

Heating temperature: 120°C
Measuring mode: Standard mode/standard heating
Measuring precision: MID. (Conditions at measurement end point: <0.05%/min)

<Resin composition and molded article>

(Moisture content)

The moisture content of the resin composition was measured according to ISO 15512 using a Karl Fischer moisture meter.

(Abundance of formaldehyde scavenger and formic acid scavenger in resin composition)

This was calculated from the charging ratio of the kneading components.

(Coefficient of variation of tensile breaking strength)

An injection molding machine (PS-40E: product of Nissei Plastic Industrial Co., Ltd.) set to a cylinder temperature of 200°C was used for molding of a molded multipurpose test piece (Type A), according to ISO 3167. The die temperature was set to 80°C. The obtained tensile test piece was used for a tensile test according to ISO 527. The cross head speed was set to 5 mm/min and the tensile breaking strength was measured. The test was carried out with n = 5, and the coefficient of variation for the tensile breaking strength with n = 5 was calculated by the following formula.

$$CV = (\sigma/\mu) \times 100$$

The symbols $\mu$ and $\sigma$ are given by the following formulas.

[Mathematical Formula 1]

$$\mu = \frac{1}{n}\sum_{i=1}^{n} x_i$$

$$\sigma^2 = \frac{1}{n}\sum_{i=1}^{n}(x_i - \mu)^2$$

(Odor during extrusion)

The odor near the extruder die during operation of the extruder was evaluated on the following scale.

Good: Absolutely no odor, or slight sweet odor.
Fair: Pungent odor of formaldehyde detected.
Poor: Powerful pungent odor of formaldehyde detected.

An odor evaluation of Good or Fair was considered acceptable, while an evaluation of Poor was considered unacceptable.

(Odor during injection molding)

Odor near the die mounting position of the injection molding machine was evaluated on the same scale as the odor during extrusion.

(Maximum height Sz)

The maximum height Sz in a 2 mm $\times$ 4 mm area at the center section of the die-fixed side of a dumbbell piece obtained according to ISO 3167 was measured according to ISO25178, and the number-average value of five such dumbbells was calculated as the maximum height Sz. The maximum height Sz was measured using a white light interference optical microscope (Contour-GT-K, by Bruker Co.).

A Sz value of 50 or lower is considered acceptable, while a value of greater than 50 is considered unacceptable.

<Materials>

<Polyacetal resin>

Polyacetal homopolymer (TENAC 4010, melting point: 175°C, available from Asahi Kasei Corp.)
Polyacetal copolymer (TENAC 4520, melting point: 165°C, available from Asahi Kasei Corp.)
Polyacetal copolymer (TENAC HC450, melting point: 168°C, available from Asahi Kasei Corp.)

<Acetylated cellulose nanofibers>

[Preparation Example 1]

Cotton linter pulp was stirred for 1 hour at ordinary temperature, 500 rpm in a uniaxial stirrer (DKV-1 φ125 mm Dissolver by Aimex Corp.), in dimethyl sulfoxide (DMSO). The mixture was then fed to a bead mill (NVM-1.5 by Aimex Corp.) using a hose pump and circulated for 120 minutes with DMSO alone, to obtain a defibrated slurry.

After adding 11 parts by mass of vinyl acetate and 1.63 parts by mass of sodium hydrogencarbonate to 100 parts by mass of the defibrated slurry in a bead mill apparatus, the mixture was further circulated for 60 minutes to obtain an acetylated cellulose nanofiber slurry.

The rotational speed of the bead mill during circulation was 2500 rpm, and the circumferential speed was 12 m/s. The beads used were zirconia, φ2.0 mm, and the fill factor was 70% (with a slit gap of 0.6 mm in the bead mill). Also during the circulation, the slurry temperature was controlled to 40°C with a chiller, for absorption of the heat released by abrasion.

After adding 192 parts by mass of purified water to the obtained acetylated cellulose nanofiber slurry, with respect to 100 parts by mass of the defibrated slurry, and thoroughly stirring the mixture, it was placed in a dehydrator and concentrated. The obtained wet cake was then re-dispersed in the same amount of purified water and stirred and concentrated, and this rinsing procedure was repeated a total of 5 times.

To an aqueous dispersion of the obtained acetylated cellulose nanofibers (solid content: 10 mass%) there was added 5 parts by mass of a polyethylene glycol derivative (GL3000) with respect to 100 parts by mass of the acetylated cellulose nanofibers, and then a revolving/rotating stirrer (V-mini300 by EME Co.) was used for vacuum drying at about 40°C to obtain an acetylated cellulose nanofiber powder.

The obtained acetylated cellulose nanofiber wet cake was used for evaluation of the properties, with the following results.

DS: 0.96, number-average fiber diameter: 65 nm, L/D: ~450, Mw: 340,000, degree of crystallinity: 75%
The acetylated cellulose nanofibers were designated as CNF (0.96).

[Preparation Examples 2 to 4]

Three different acetylated cellulose nanofibers were obtained with different acetylation degrees, by adjusting the circulating operation time after addition of vinyl acetate and sodium hydrogencarbonate into a bead mill apparatus.

(Preparation Example 2) CNF (0.41) DS: 0.41, number-average fiber diameter: 60 nm, L/D: -470, Mw: 370,000, degree of crystallinity: 80%
(Preparation Example 3) CNF (0.71) DS: 0.71, number-average fiber diameter: 64 nm, L/D: ~450, Mw: 350,000, degree of crystallinity: 79%
(Preparation Example 4) CNF (1.29) DS: 1.29, number-average fiber diameter: 69 nm, L/D: -430, Mw: 330,000, degree of crystallinity: 78%

<Unmodified cellulose nanofibers>

[Preparation Example 5]

CELISH KY-100G powder (product of Daicel Fine Chemicals) was diluted with purified water to a concentration of 1 mass%, and stirred and mixed for 20 minutes in a uniaxial stirrer at 500 rpm. The moisture content was then adjusted by filtration to a solid content of 10 mass%, to obtain a cellulose nanofiber aqueous dispersion. Next, polyethylene glycol (PEG20,000, available from Sanyo Chemical Industries, Ltd.) was added to an aqueous dispersion of the cellulose nanofibers to 5 parts by mass with respect to 100 parts by mass of the cellulose nanofibers, and then a revolving/rotating stirrer was used for vacuum drying at about 40°C to obtain a cellulose nanofiber powder CNF (0). The results of evaluating the properties were as follows.
CNF (0) DS: 0, Number-average fiber diameter: 71 nm, L/D: ~220, Mw: 250,000, degree of crystallinity: 66%

<Additional components>

Dispersing agent: Polyethylene glycol (GL3000), available from Sigma-Aldrich
Hindered phenol-based antioxidant: IRGANOX, available from BASF Japan
Additives:

Ethylene bisstearylamide: KAOWAX EB-FF, available from Kao Corp.
Formaldehyde scavenger: Melamine, available from Nissan Chemical Industries, Ltd.
Formic acid scavenger: Calcium stearate, available from Sakai Chemical Industry Co., Ltd.

<Production of resin compositions>

The screw construction had two kneading discs with a feed function (RKD) set at the center of the extruder, and one RKD also immediately before vacuum deaeration at the downstream end, followed by one kneading disc with a returning function (LKD), in that order.

The screw rotational speed of the extruder was 150 rpm, and the feeder was set for a total extrusion throughput of 5 kg/hr. The obtained pellets were used in the following tests. The results are shown in Table 1 as Reference Example 1.

[Example 1]

Using a codirectional rotational twin-screw extruder ZSK26 MC (Coperion GmbH) with L/D = 48 having one loading port each at the upstream end and the center section of the extruder, and with the cylinder temperature set to 200°C, a dry blend of 0.25 parts by mass of a hindered phenol-based antioxidant, 0.15 parts by mass of a nitrogen-containing compound and 0.2 parts by mass of melamine, with respect to 100 parts by mass of TENAC 4520 as the polyacetal resin, was supplied in a fixed amount through a loss-in-weight feeder set at the upstream loading port, while CNF (0) was supplied in a quantity for 10.5 parts by mass with respect to 100 parts by mass of the polyacetal resin through a loss-in-weight feeder set at the center loading port, and melt kneading was carried out for extrusion into a strand which was cooled and cut into pellets of the polyacetal resin composition. The downstream end of the extruder was provided with vacuum deaeration capability to remove the air and generated gas in the extruder.
The CNF (0) used was subjected to vacuum drying treatment at 80°C for 5 h using a vacuum dryer immediately before loading into the extruder, and melt kneading was carried out with a moisture content of 1.6 mass%.
The screw construction had a design with three RKDs upstream from the center supply port of the extruder, and three RKDs and one LKD immediately before vacuum deaeration at the downstream end, in that order. The screw rotational speed of the extruder was 150 rpm, and the feeder was set for a total extrusion throughput of 5 kg/hr. The obtained pellets were used in the following tests. The results are shown in Table 1 as Example 1.

[Comparative Example 1]

Extrusion and evaluation were carried out in the same manner as Example 1, except that the CNF (0) was not subjected to vacuum drying treatment before melt kneading. The moisture content of the CNF before melt kneading was 12 mass%. The results are listed in Table 1.

[Examples 2 to 6]

These Examples were all carried out in the same manner as Example 1, except that the types of polyacetal resin and cellulose were changed as listed in Table 1, and the resulting pellets were used for each test. The results are listed in Table 1.

[Comparative Examples 2 to 6]

These Comparative Examples were all carried out in the same manner as Comparative Example 1, except that the types of polyacetal resin and cellulose were changed as listed in Table 1, and the resulting pellets were used for each test. The results are listed in Table 1.

[Comparative Example 7]

This Comparative Example was carried out in the same manner as Example 1, except that the type of cellulose was changed to cotton linter pulp as listed in Table 1, and the resulting pellets were used for each test. The results are listed in Table 1. In Comparative Example 7, since pulp was supplied for kneading with the polyacetal resin instead of cellulose nanofibers, drying during vacuum drying treatment at 80°C for 5 h did not reach to the pulp interior, such that the fibers with higher water retention became exposed as defibration of the pulp progressed during extrusion, and decomposition of the polyacetal resin was accelerated.

<Production of resin compositions with different moisture contents>

[Examples 7 to 8 and Comparative Example 8]

These were carried out in the same manner as Example 1, except that the cellulose drying time before melt kneading in the extruder was changed to 90 minutes (Example 7), 45 minutes (Example 8) and 30 minutes (Comparative Example 8) and the moisture contents were as listed in Table 2, and the resulting pellets were used for each test. The results are listed in Table 2.

<Production of molded articles>

[Example 9]

The resin composition obtained in Example 1 was placed in an aluminum bag (water vapor permeability: 0.5 to 1.0 g/($m^2$·24 h), at 40% relative humidity and a temperature of 90°C, measured according to JIS Z0208, same hereunder) and stored for 2 days, after which an EC5P injection molding machine (Toshiba Machine Co., Ltd.) set to a cylinder temperature of 200°C was used for molding into a type 3 tensile test piece with an ISO37 thickness of 2 mm, with the resin composition moisture content at 0.03 mass% to 0.3 mass%. The die temperature was set to 60°C. The obtained tensile test piece was used for each test.

[Examples 10 and 11]

When the storage method was changed to air (Example 10) or an interior environment at 23°C, 50 RH% (Example 11) after obtaining the resin composition, the moisture contents of the resin compositions were as listed in Table 3. Test pieces were molded in the same manner as Example 9 with vacuum drying at 80°C for 48 hours and a resin composition moisture content of 0.03 mass% to 0.3 mass%, and used for each test. The results are listed in Table 3.

[Example 12]

After the resin composition obtained in Comparative Example 1 was placed in an aluminum bag and stored for 2 days, the resulting resin composition moisture content was as listed in Table 3. A type 3 tensile test piece with an ISO37 thickness of 2 mm was molded using an EC5P injection molding machine (Toshiba Machine Co., Ltd.) set to a cylinder temperature of 200°C, with vacuum drying at 80°C for 48 hours and a resin composition moisture content of 0.03 mass% to 0.3 mass%. The die temperature was set to 60°C. The obtained tensile test piece was used for each test.

[Example 13]

This was carried out in the same manner as Example 12, except that the storage method was changed to air, and the obtained test piece was used for each test. The results are listed in Table 3.

[Comparative Examples 9 to 12]

These were all carried out in the same manner as Example 10, except that the type of resin composition and storage method were changed as listed in Table 3 and vacuum drying treatment was not carried out, and the obtained test pieces were used for each test. The results are listed in Table 3.

[Examples 14 to 16]

These Examples were carried out in the same manner as Example 9, except that the cellulose was changed as listed in Table 4, and the obtained test pieces were used for each test. The results are listed in Table 4.

[Examples a-1 to a-12 and b-1 to b-9]

CNF (0.96) samples were prepared, with the drying time for the cellulose changed in the same manner as Example 7, and with moisture contents of 0.2 mass%, 2 mass% and 5 mass%. Pellets were obtained in the same manner as Example 1, except that the compositions were changed as listed in Tables 5 and 6. The obtained pellets (100 g) were placed in a packaging bag (aluminum bag) with a water vapor permeability of 1 g/($m^2$·24 h) or lower at 40% relative humidity and a temperature of 90°C, and after sealing with a heat seal, they were allowed to stand for 24 hours at 23°C. The packaging bags were then opened and the odor was evaluated on the following scale.

Good: No odor
Fair: Slight noticeable odor.
Poor: Strong noticeable odor.

An odor evaluation of Good or Fair was considered acceptable, while an evaluation of Poor was considered unacceptable. The results are shown in Tables 5 and 6.

[Table 1]

Table 1

| | | | Example 1 | Example 2 | Example 3 | Example 4 | Example 5 | Example 6 | Comp. Example 1 | Comp. Example 2 | Comp. Example 3 | Comp. Example 4 | Comp. Example 5 | Comp. Example 6 | Comp. Example 7 |
|---|---|---|---|---|---|---|---|---|---|---|---|---|---|---|---|
| Polyacetal | TENAC 4520 | Parts by mass | 100 | 100 | | | | | 100 | 100 | | | | | 100 |
| | TENAC 4010 | Parts by mass | | | 100 | 100 | | | | | 100 | 100 | | | |
| | TENAC HC450 | Parts by mass | | | | | 100 | 100 | | | | | 100 | 100 | |
| Other components | IRGANOX | Parts by mass | 0.25 | 0.25 | 0.25 | 0.25 | 0.25 | 0.25 | 0.25 | 0.25 | 0.25 | 0.25 | 0.25 | 0.25 | 0.25 |
| | Melamine | Parts by mass | 0.15 | 0.15 | 0.15 | 0.15 | 0.15 | 0.15 | 0.15 | 0.15 | 0.15 | 0.15 | 0.15 | 0.15 | 0.15 |
| | Ethylene bisstearylamide | Parts by mass | 0.2 | 0.2 | 0.2 | 0.2 | 0.2 | 0.2 | 0.2 | 0.2 | 0.2 | 0.2 | 0.2 | 0.2 | 0.2 |
| | CNF (0), with drying | Parts by mass | 10.5 | | 10.5 | | 10.5 | | | | | | | | |
| | CNF (0.96), with drying | Parts by mass | | 10.5 | | 10.5 | | 10.5 | | | | | | | |
| | CNF (0), without drying | Parts by mass | | | | | | | 10.5 | | | | 10.5 | | |
| | CNF (0.96), without drying | Parts by mass | | | | | | | | 10.5 | 10.5 | 10.5 | | | |
| Cellulose | Cotton linter pulp, with drying | Parts by mass | | | | | | | | | | | | 10.5 | 10.5 |
| | Cellulose moisture content | mass% | 1.6 | 1.2 | 1.6 | 1.2 | 1.6 | 1.2 | 12 | 12 | 12 | 12 | 12 | 12 | 12 |

(continued)

| | | Poor/Ac-ceptable/Good | Example 1 | Example 2 | Example 3 | Example 4 | Example 5 | Example 6 | Comp. Example 1 | Comp. Example 2 | Comp. Example 3 | Comp. Example 4 | Comp. Example 5 | Comp. Example 6 | Comp. Example 7 |
|---|---|---|---|---|---|---|---|---|---|---|---|---|---|---|---|
| Evaluation of resin composition | Odor during extrusion | | Good | Good | Acceptable | Good | Acceptable | Good | Poor | Poor | Poor | Poor | Poor | Poor | Poor |

[Table 2]

Table 2

| | | | Example 7 | Example 8 | Comp. Example 8 |
|---|---|---|---|---|---|
| Polyacetal | TENAC 4520 | Parts by mass | 100 | 100 | 100 |
| Other components | IRGANOX | Parts by mass | 0.25 | 0.25 | 0.25 |
| | Melamine | Parts by mass | 0.15 | 0.15 | 0.15 |
| | Ethylene bisstearylamide | Parts by mass | 0.2 | 0.2 | 0.2 |
| Cellulose nanofibers | CNF (0) moisture content: 4 mass% | Parts by mass | 10.5 | | |
| | CNF (0) moisture content: 5 mass% | Parts by mass | | 10.5 | |
| | CNF (0) moisture content: 8 mass% | Parts by mass | | | 10.5 |
| Evaluation of resin composition | Odor during extrusion | Poor/Acceptable/ Good | Good | Good | Poor |

[Table 3]

Table 3

| | | Example 9 | Example 10 | Example 11 | Example 12 | Example 13 | Comp. Example 9 | Comp. Example 10 | Comp. Example 11 | Comp. Example 12 |
|---|---|---|---|---|---|---|---|---|---|---|
| Resin composition type | | Example 1 | Example 1 | Example 1 | Comp. Example 1 | Comp. Example 1 | Example 1 | Example 1 | Comp. Example 1 | Comp. Example 1 |
| Method of storing resin composition | | Aluminum bag | In air | 23°C, 50RH% | Aluminum bag | In air | In air | 23°C, 50RH% | Aluminum bag | In air |
| Resin composition moisture content (during storage) | mass% | 0.09 | 0.15 | 0.31 | 0.35 | 0.4 | 0.32 | 0.46 | 0.35 | 0.47 |
| With/without drying of resin composition before injection molding | With/without | Without | With | With | With | With | Without | Without | Without | Without |
| Resin composition moisture content (after drying treatment) | mass% | - | 0.09 | 0.07 | 0.10 | 0.13 | - | - | - | - |
| Resin composition moisture content (during molding) | mass% | 0.08 | 0.09 | 0.07 | 0.10 | 0.13 | 0.32 | 0.46 | 0.35 | 0.47 |
| Evaluation of molded article | Coefficient of variation of tensile breaking strength | 0.12 | 0.04 | 0.06 | 0.05 | 0.06 | 0.16 | 0.23 | 0.18 | 0.21 |
| | Maximum height Sz (μm) | 42.1 | 33.5 | 35.6 | 35.4 | 40.1 | 56.8 | 84.3 | 78.9 | 79.6 |
| | Odor during injection molding (Poor/Acceptable/Good) | Acceptable | Good | Good | Good | Good | Poor | Poor | Poor | Poor |

[Table 4]

Table 4

|  |  |  | Example 14 | Example 15 | Example 16 |
|---|---|---|---|---|---|
| Polyacetal | TENAC 4520 | Parts by mass | 100 | 100 | 100 |
| Other components | IRGANOX | Parts by mass | 0.25 | 0.25 | 0.25 |
|  | Melamine | Parts by mass | 0.15 | 0.15 | 0.15 |
|  | Ethylene bisstearylamide | Parts by mass | 0.2 | 0.2 | 0.2 |
| Cellulose nanofibers | CNF (0.41) | Parts by mass | 10.5 |  |  |
|  | CNF (0.71) | Parts by mass |  | 10.5 |  |
|  | CNF (1.29) | Parts by mass |  |  | 10.5 |
| Resin composition moisture content during injection molding |  | mass% | 0.1 | 0.08 | 0.07 |
| Evaluation of molded article | Coefficient of variation of tensile breaking strength |  | 0.09 | 0.03 | 0.01 |
|  | Maximum height Sz | $\mu$m | 45.8 | 27.5 | 22.8 |
|  | Odor during injection molding | Poor/ Acceptable/ Good | Acceptable | Good | Good |

[Table 5]

Table 5

| | | | Example a-1 | Example a-2 | Example a-3 | Example a-4 | Example a-5 | Example a-6 | Example a-7 | Example a-8 | Example a-9 | Example a-10 | Example a-11 | Example a-12 |
|---|---|---|---|---|---|---|---|---|---|---|---|---|---|---|
| Polyacetal | TENAC 4520 | Parts by mass | 100 | 100 | 100 | 100 | 100 | 100 | 100 | 100 | 100 | 100 | 100 | 100 |
| Other components | IRGANOX | Parts by mass | 0.25 | 0.25 | 0.25 | 0.25 | 0.25 | 0.25 | 0.25 | 0.25 | 0.25 | 0.25 | 0.25 | 0.25 |
| | Melamine | Parts by mass | 0.05 | 0.23 | | | 0.05 | 0.5 | | | 0.06 | 1 | | |
| | Ethylene bisstearylamide | Parts by mass | 0.2 | 0.2 | 0.2 | 0.2 | 0.2 | 0.2 | 0.2 | 0.2 | 0.2 | 0.2 | 0.2 | 0.2 |
| | Calcium stearate | Parts by mass | | | 0.05 | 0.23 | | | 0.05 | 0.5 | | | 0.06 | 1 |
| Cellulose nanofibers | CNF (0.96) moisture content: 0.2 mass% | Parts by mass | 11 | 11 | 11 | 11 | | | | | | | | |
| | CNF (0.96) moisture content: 2 mass% | Parts by mass | | | | | 11 | 11 | 11 | 11 | | | | |
| | CNF (0.96) moisture content: 5 mass% | Parts by mass | | | | | | | | | 11 | 11 | 11 | 11 |
| Evaluation of resin composition | Odor during extrusion | Poor/ Acceptable/ Good | Good | Good | Good | Good | Good | Good | Good | Good | Acceptable | Good | Acceptable | Good |
| | Odor during bag storage | Poor/ Acceptable/ Good | Good | Good | Good | Good | Acceptable | Good | Acceptable | Good | Acceptable | Good | Acceptable | Good |

EP 4 321 577 A1

(continued)

| | Satisfied/ not satisfied | Example a-1 | Example a-2 | Example a-3 | Example a-4 | Example a-5 | Example a-6 | Example a-7 | Example a-8 | Example a-9 | Example a-10 | Example a-11 | Example a-12 |
|---|---|---|---|---|---|---|---|---|---|---|---|---|---|
| Satisfying $b \times c \times 0.00012 + 0.04 \leq a1 \leq b \times c \times 0.015 + 0.2$ or $b \times c \times 0.00012 + 0.04 \leq a2 \leq b \times c \times 0.015 + 0.2$ | Satisfied/ not satisfied | Satisfied | Satisfied | Satisfied | Satisfied | Satisfied | Satisfied | Satisfied | Satisfied | Satisfied | Satisfied | Satisfied | Satisfied |

[Table 6]

Table 6

| | | | Example b-1 | Example b-2 | Example b-3 | Example b-4 | Example b-5 | Example b-6 | Example b-7 | Example b-8 | Example b-9 |
|---|---|---|---|---|---|---|---|---|---|---|---|
| Polyacetal | TENAC 4520 | Parts by mass | 100 | 100 | 100 | 100 | 100 | 100 | 100 | 100 | 100 |
| Other components | IRGANOX | Parts by mass | 0.25 | 0.25 | 0.25 | 0.25 | 0.25 | 0.25 | 0.25 | 0.25 | 0.25 |
| | Melamine | Parts by mass | | 0.3 | | | 0.6 | | | 1.2 | |
| | Ethylene bisstearylamide | Parts by mass | 0.2 | 0.2 | 0.2 | 0.2 | 0.2 | 0.2 | 0.2 | 0.2 | 0.2 |
| | Calcium stearate | Parts by mass | | | 0.3 | | | 0.6 | | | 1.2 |
| Cellulose nanofibers | CNF (0.96) moisture content: 0.2 mass% | Parts by mass | 11 | 11 | 11 | | | | | | |
| | CNF (0.96) moisture content: 2 mass% | Parts by mass | | | | 11 | 11 | 11 | | | |
| | CNF (0.96) moisture content: 5 mass% | Parts by mass | | | | | | | 11 | 11 | 11 |
| Evaluation of resin composition | Odor during extrusion | Poor/ Acceptable/ Good | Acceptable | Acceptable | Acceptable | Acceptable | Acceptable | Acceptable | Acceptable | Acceptable | Acceptable |
| | Odor during bag storage | Poor/ Acceptable/ Good | Unacceptable | Unacceptable | Unacceptable | Unacceptable | Unacceptable | Unacceptable | Unacceptable | Unacceptable | Unacceptable |
| Satisfying $b \times c \times 0.00012 + 0.04 \le a1 \le b \times c \times 0.015 + 0.2$ or $b \times c \times 0.00012 + 0.04 \le a2 \le b \times c \times 0.015 + 0.2$ | | Satisfied/ not satisfied | Not satisfied | Not satisfied | Not satisfied | Not satisfied | Not satisfied | Not satisfied | Not satisfied | Not satisfied | Not satisfied |

INDUSTRIAL APPLICABILITY

The resin composition according to one aspect of the invention can reduce odor and gas generation while also inhibiting generation of voids in molded articles, and it can therefore be suitably applied for a wide variety of purposes.

**Claims**

1.  A method for producing a resin composition comprising cellulose nanofibers and a polyacetal resin, wherein the method includes:
    a step of melt kneading a kneading component that includes cellulose nanofibers and a polyacetal resin with a moisture content of the cellulose nanofibers being 0.01 mass% to 5 mass%, to obtain a resin composition.

2.  The method according to claim 1, wherein a portion of the resin composition is used as a portion of the kneading component.

3.  The method according to claim 1, wherein a number-average fiber diameter of the cellulose nanofibers is 10 to 1000 nm.

4.  The method according to claim 1, wherein a degree of acyl substitution of the cellulose nanofibers is 0.5 to 1.5.

5.  The method according to claim 1, wherein a degree of crystallinity of the cellulose nanofibers is 60% or greater.

6.  The method according to claim 1, wherein a moisture content of the resin composition is 0.03 mass% to 0.3 mass%.

7.  The method according to any one of claims 1 to 6, wherein the kneading component includes a formaldehyde scavenger, and a formaldehyde scavenger content a1 [mass%] of the total kneading component, a cellulose nanofiber moisture content b [mass%] supplied to melt kneading, and a cellulose nanofiber content c [mass%] of the total kneading component, satisfy the following relationship:

$$b \times c \times 0.00012 + 0.04 \leq a1 \leq b \times c \times 0.015 + 0.2.$$

8.  The method according to any one of claims 1 to 6, wherein the kneading component includes a formic acid scavenger, and a formic acid scavenger content a2 [mass%] of the total kneading component, a cellulose nanofiber moisture content b [mass%] supplied to melt kneading, and a cellulose nanofiber content c [mass%] of the total kneading component, satisfy the following relationship:

$$b \times c \times 0.00012 + 0.04 \leq a2 \leq b \times c \times 0.015 + 0.2.$$

9.  A resin composition comprising cellulose nanofibers and a polyacetal resin, wherein a moisture content of the resin composition is 0.03 mass% to 0.3 mass%.

10. The resin composition according to claim 9, wherein a number-average fiber diameter of the cellulose nanofibers is 10 to 1000 nm.

11. The resin composition according to claim 9, wherein a degree of acyl substitution of the cellulose nanofibers is 0.5 to 1.5.

12. The resin composition according to claim 9, wherein a degree of crystallinity of the cellulose nanofibers is 60% or greater.

13. Pellets of a resin composition according to any one of claims 9 to 12.

14. Pellets according to claim 13, wherein a moisture content after standing for 48 hours at 40°C under saturated water vapor pressure is 0.3 mass% to 5.0 mass%.

15. A molded article of a resin composition comprising cellulose nanofibers and a polyacetal resin, wherein a moisture content of the molded article is 0.03 mass% to 0.3 mass%.

16. The molded article according to claim 15, wherein a number-average fiber diameter of the cellulose nanofibers is 10 to 1000 nm.

17. The molded article according to claim 15, wherein a degree of acyl substitution of the cellulose nanofibers is 0.5 to 1.5.

18. The molded article according to claim 15, wherein a degree of crystallinity of the cellulose nanofibers is 60% or greater.

19. A method for producing a molded article of a resin composition comprising cellulose nanofibers and a polyacetal resin, wherein the method includes:

   a step of obtaining a resin composition comprising cellulose nanofibers and a polyacetal resin, and
   a step of molding the resin composition to obtain a molded article,

   and wherein the resin composition is molded with a moisture content of the resin composition at 0.03 mass% to 0.3 mass%.

20. A method for producing a kneaded blend of a resin composition comprising cellulose nanofibers and a polyacetal resin, wherein the method includes:

   a storage step in which a resin composition comprising the cellulose nanofibers and the polyacetal resin is stored with a moisture content of greater than 0.3 mass%,
   a drying step in which the stored resin composition is dried at a temperature Td which is a temperature of at least 70°C lower than a melting point Tm of the polyacetal resin, to a moisture content of 0.03 mass% to 0.3 mass%, and
   a heating step in which the resin composition that has reached a moisture content of 0.03 mass% to 0.3 mass% in the drying step is hot kneaded.

21. A method for producing a molded article of a resin composition comprising cellulose nanofibers and a polyacetal resin, wherein the method includes:

   a storage step in which a resin composition comprising the cellulose nanofibers and the polyacetal resin is stored with a moisture content of greater than 0.3 mass%,
   a drying step in which the stored resin composition is dried at a temperature Td which is a temperature of at least 70°C lower than a melting point Tm of the polyacetal resin, to a moisture content of 0.03 mass% to 0.3 mass%, and
   a molding step in which the resin composition that has reached a moisture content of 0.03 mass% to 0.3 mass% in the drying step is hot molded.

22. The method according to any one of claims 19 to 21, wherein the resin composition is obtained by the method according to claim 1.

23. A method of storing a resin composition, wherein a resin composition comprising cellulose nanofibers and a polyacetal resin is stored in a sealed state in a packaging bag having a water vapor permeability of 1 $g/(m^2 \cdot 24\ h)$ or lower at 40% relative humidity and a temperature of 90°C.

24. The method according to claim 23, wherein the resin composition is a resin composition according to any one of claims 9 to 12.

25. A pellet container composed of pellets of a resin composition comprising cellulose nanofibers and a polyacetal resin, and a container housing the pellets,
   wherein a moisture content of the pellets is 0.03 mass% to 0.3 mass%.

26. The pellet container according to claim 25, wherein a moisture content of the pellets after standing for 48 hours at 40°C under saturated water vapor pressure is 0.3 mass% to 5.0 mass%.

27. The pellet container according to claim 25 or 26, wherein the container is constituted of a member having a water vapor permeability of 1 g/(m$^2$·24 h) or lower at 40% relative humidity and a temperature of 90°C, and comprises a sealing mean.

**EP 4 321 577 A1**

| | |
|---|---|
| **INTERNATIONAL SEARCH REPORT** | International application No. |
| | **PCT/JP2022/017415** |

**A. CLASSIFICATION OF SUBJECT MATTER**

*C08L 59/00*(2006.01)i; *C08B 15/00*(2006.01)i; *C08B 15/02*(2006.01)i; *C08J 3/20*(2006.01)i; *C08J 3/215*(2006.01)i; *C08J 5/00*(2006.01)i; *C08L 1/02*(2006.01)i; *C08L 1/10*(2006.01)i

FI: C08L59/00; C08B15/00; C08B15/02; C08J3/20 B CEP; C08J3/215; C08J5/00 CEZ; C08L1/02; C08L1/10

According to International Patent Classification (IPC) or to both national classification and IPC

**B. FIELDS SEARCHED**

Minimum documentation searched (classification system followed by classification symbols)

C08L59/00; C08B15/00; C08B15/02; C08J3/20; C08J3/215; C08J5/00; C08L1/02; C08L1/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2021/038723 A1 (RYOBI LTD) 04 March 2021 (2021-03-04) | 9-19 |
| | claims, paragraphs [0025]-[0026], [0028], [0063], [0072]-[0074], tables 1-2 | |
| A | | 1-8, 10-27 |
| X | JP 2015-52052 A (SEIKO PMC CORP) 19 March 2015 (2015-03-19) | 1-6, 9-19, 22 |
| | claims, paragraphs [0019], [0043], [0047], [0073]-[0076] | |
| A | | 7-8, 20-21, 23-27 |
| X | JP 2017-171698 A (STARLITE IND) 28 September 2017 (2017-09-28) | 1-6, 9-19, 22 |
| | claims, paragraphs [0010]-[0013], [0028] | |
| A | | 7-8, 20-21, 23-27 |
| X | JP 2019-131792 A (I COMPOLOGY CORP) 08 August 2019 (2019-08-08) | 1-6, 9-19, 22 |
| | claims, paragraphs [0029]-[0030], [0032], [0081]-[0082], [0113]-[0117] | |
| A | | 7-8, 20-21, 23-27 |
| A | JP 2001-64321 A (MITSUI CHEMICALS INC) 13 March 2001 (2001-03-13) | 1-27 |
| | entire text, all drawings | |

☑ Further documents are listed in the continuation of Box C. ☑ See patent family annex.

| |
|---|
| \* Special categories of cited documents: |
| "A" document defining the general state of the art which is not considered to be of particular relevance |
| "E" earlier application or patent but published on or after the international filing date |
| "L" document which may throw doubts on priority claim(s) or which is cited to establish the publication date of another citation or other special reason (as specified) |
| "O" document referring to an oral disclosure, use, exhibition or other means |
| "P" document published prior to the international filing date but later than the priority date claimed |

| |
|---|
| "T" later document published after the international filing date or priority date and not in conflict with the application but cited to understand the principle or theory underlying the invention |
| "X" document of particular relevance; the claimed invention cannot be considered novel or cannot be considered to involve an inventive step when the document is taken alone |
| "Y" document of particular relevance; the claimed invention cannot be considered to involve an inventive step when the document is combined with one or more other such documents, such combination being obvious to a person skilled in the art |
| "&" document member of the same patent family |

| Date of the actual completion of the international search | Date of mailing of the international search report |
|---|---|
| **24 June 2022** | **05 July 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

40

**INTERNATIONAL SEARCH REPORT**

International application No.

**PCT/JP2022/017415**

### C. DOCUMENTS CONSIDERED TO BE RELEVANT

| Category* | Citation of document, with indication, where appropriate, of the relevant passages | Relevant to claim No. |
|---|---|---|
| A | JP 2013-111961 A (KONISHI CO LTD) 10 June 2013 (2013-06-10)<br>entire text, all drawings | 1-27 |
| A | WO 2015/151343 A1 (POLYPLASTICS CO., LTD.) 08 October 2015 (2015-10-08)<br>paragraphs [0085], [0122] | 1-27 |
| A | JP 2020-7493 A (ASAHI KASEI CORP) 16 January 2020 (2020-01-16)<br>entire text, all drawings | 1-27 |
| A | JP 2013-213155 A (MITSUBISHI ENGINEERING PLASTICS CORP) 17 October 2013<br>(2013-10-17)<br>entire text, all drawings | 1-27 |
| A | WO 2010/119826 A1 (POLYPLASTICS CO., LTD.) 21 October 2010 (2010-10-21)<br>entire text, all drawings | 1-27 |
| A | JP 2021-8635 A (ASAHI KASEI CORP) 28 January 2021 (2021-01-28)<br>entire text, all drawings | 1-27 |
| P, A | WO 2021/192473 A1 (THREE BOND CO LTD) 30 September 2021 (2021-09-30)<br>entire text, all drawings | 1-27 |

**INTERNATIONAL SEARCH REPORT**

| International application No. |
|---|
| **PCT/JP2022/017415** |

| Box No. III | Observations where unity of invention is lacking (Continuation of item 3 of first sheet) |
|---|---|

This International Searching Authority found multiple inventions in this international application, as follows:

This application sets forth the following three invention groups.

Document 1: JP 2017-171698 A: claims, examples (in particular, paragraph [0028])

(Invention group 1)
Claim 1 has the special technical feature of a "method for producing a resin composition containing cellulose nanofibers and a polyacetal resin, the method comprising a step of melt-kneading a kneaded component containing the cellulose nanofibers and the polyacetal resin while the water content of the cellulose nanofibers is 0.01-5 mass% to obtain a resin composition," and is thus classified as invention group 1.
In addition, claims 2-8 referring to claim 1 are dependent on claim 1 and are thus classified as invention group 1.

(Invention group 2)
Claims 9, 15, 19-21, and 25 do not specify that the " water content of the cellulose nanofibers is 0.01-5 mass%," and cannot be said to have a technical feature identical or corresponding to claim 1 classified as invention group 1. These claims and claim 1 share the common technical feature of a "resin composition containing cellulose nanofibers and a polyacetal resin." However, said technical feature does not make a contribution over the prior art in light of the disclosure of document 1 (paragraph [0028], etc.), and thus cannot be said to be a special technical feature.
Also, claims 9, 15, 19-21, and 25 are not dependent on claim 1. Furthermore, claims 9, 15, 19-21, and 25 are not substantially identical to or similarly closely related to any of the claims classified as invention group 1.
In addition, claim 9 and claims 15, 19-21, and 25 have the same or corresponding special technical feature of a "resin composition, molded body, or pellets having a water content of 0.03-0.3 mass%."
Therefore, claims 9, 15, 19-21, and 25, and claims 10-14, 16-18, 22, 24, and 26-27 referring to claims 9, 15, 19-21, and 25 are classified as invention group 2.

(Invention group 3)
Claim 23 and claims 1, 9, 15, 19-21, and 25 share the common technical feature of a "resin composition containing cellulose nanofibers and a polyacetal resin." However, said technical feature does not make a contribution over the prior art in light of the disclosure of document 1 (paragraph [0028], etc.), and thus cannot be said to be a special technical feature.
In addition, claim 23 is not dependent on claims 1, 9, 15, 19-21, and 25, and is not substantially identical to or similarly closely related to any of the claims classified as invention group 1 or 2.
Thus, claim 23 is classified as invention group 3.

The common technical feature of invention groups 1-3 is a "resin composition containing cellulose nanofibers and a polyacetal resin," and this is not a special technical feature, and thus invention groups 1-3 cannot belong to a single group of inventions.

Form PCT/ISA/210 (continuation of first sheet) (January 2015)

**INTERNATIONAL SEARCH REPORT**

International application No.

**PCT/JP2022/017415**

| Box No. III | Observations where unity of invention is lacking (Continuation of item 3 of first sheet) |

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**  ☑ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

International application No.

**PCT/JP2022/017415**

| Patent document cited in search report | | | Publication date (day/month/year) | Patent family member(s) | Publication date (day/month/year) |
|---|---|---|---|---|---|
| WO | 2021/038723 | A1 | 04 March 2021 | (Family: none) | |
| JP | 2015-52052 | A | 19 March 2015 | (Family: none) | |
| JP | 2017-171698 | A | 28 September 2017 | (Family: none) | |
| JP | 2019-131792 | A | 08 August 2019 | (Family: none) | |
| JP | 2001-64321 | A | 13 March 2001 | (Family: none) | |
| JP | 2013-111961 | A | 10 June 2013 | (Family: none) | |
| WO | 2015/151343 | A1 | 08 October 2015 | US 2017/0114176 A1 paragraphs [0089], [0131] EP 3109267 A1 KR 10-2016-0085371 A CN 105916905 A | |
| JP | 2020-7493 | A | 16 January 2020 | (Family: none) | |
| JP | 2013-213155 | A | 17 October 2013 | (Family: none) | |
| WO | 2010/119826 | A1 | 21 October 2010 | TW 201041946 A | |
| JP | 2021-8635 | A | 28 January 2021 | US 2021/0231196 A1 all articles, all figures EP 3805611 A1 CN 111971491 A | |
| WO | 2021/192473 | A1 | 30 September 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010119810 A
- WO 2012049926 A
- WO 2016148233 A

**Non-patent literature cited in the description**

- Japanese Pharmacopeia. 15th Edition Reference Manual. Hirokawa Shoten
- Mokushitsu Kagaku Jikken Manual. 2000, 92-97
- *Cellulose,* 1998, vol. 5, 153-164